# EUROPEAN PATENT SPECIFICATION

(11) **EP 3 444 317 B1**
(45) Date of publication and mention of the grant of the patent: **08.07.2020**
(21) Application number: 17382573.8
(22) Date of filing: 16.08.2017
(51) Int. Cl.: C09K 11/02, C08G 18/00, C08G 18/38, C08G 18/48

(54) **EPOXY-POLYTHIOURETHANE MATRIX CONTAINING NANOCRYSTALS**
EPOXID-POLYTHIOURETHAN-MATRIX MIT NANOKRISTALLEN
MATRICE D'ÉPOXY POLYTHIOURÉTHANE CONTENANT DES NANOCRISTAUX

(43) Date of publication of application: 20.02.2019
(73) Proprietor: Suzhou Rainbow Materials Co., Ltd., Zhangjiagang Jiangsu 215634 (CN)
(72) Inventor: CARRETÉ, Àlex, 08015 Barcelona (ES); GÖTHEL, Frank, 09125 Chemnitz (DE); RODRÍGUEZ, Denis, 36213 Vigo (Pontevedra) (ES); SMITH, Daniel, Rotherham, South Yorkshire S60 2NA (GB); MENDIZABAL ZALACAIN, Julen, 08029 Barcelona (ES)
(74) Representative: Baudler, Ron

(56) References cited:
- WO-A1-2016/168048
- US-A1- 2015 098 212
- US-A1- 2017 152 437

## Description

### Technical field

The present invention relates to a nanocrystal composite comprising nanocrystals embedded in a matrix formed by epoxy-thiourethane polymer. Composites of the present invention provide improved thermal and photo thermal stability to the nanocrystals.

### Background of the invention

Semiconductor nanocrystals can be used as light down-converters, i.e., shorter wavelength light is converted to longer wavelength light. The nanocrystal (NC) composites are used in a broad range of applications including displays, lighting, security inks, bio-labelling and solar concentrators. In all the cases, the NC composites are exposed to a certain light flux and temperature. The exposure of the NC composites to photons and temperature under the presence of air and moisture causes decrease of the optical properties of the composite.

NC composites are used in light down-conversion applications. The state of the art NC composites degrade by exposure to temperature and photons over time. To improve the stability of the NCs, the composites need an additional protection against oxygen and moisture e.g. by a high performance barrier film or glass encapsulation. To avoid the presence of air and moisture in the encapsulated NC composite, the manufacturing has to be performed under inert atmosphere.

In one approach the NCs are embedded in an epoxy-amine resin, which is placed between barrier layers. However, this approach leads to thicker products and incurs additional costs since the barrier layers are sophisticated organic-inorganic multilayers and the product needs to be manufactured in oxygen/moisture free environment. Despite the barrier layers, oxygen and moisture still penetrate through the unprotected edges of the product leading to degradation in these areas.

In another approach, the NCs are embedded in an acrylic polymerizable formulation, and subsequently, the formed NC composite is encapsulated inside a glass tube. This process requires a sophisticated manufacturing line operating under oxygen/moisture free environment. Such fragile products require a modification of the display architecture, which further increases costs.

Commonly used polymeric matrices in NC composites in down-conversion are based on (meth)acrylates, allyl or epoxy resins. Polymer systems initiated by UV irradiation have been preferred for large scale film manufacturing. However, none of (meth)acrylates, allyl or epoxy resin based matrices described in the art provide enough stability to the NCs under the operating conditions (photon flux, high temperature, ambient atmosphere). In most of the cases an additional high performance barrier film is needed to prevent the permeation of oxygen and moisture inside the polymeric matrix, which increases the cost and thickness of such NC composite products.

In a further approach, thiols have been used, as a part of the polymeric matrix for NC composites. Thiols have been found to be beneficial for the thermal stability of the matrix, broadening the range of matrix chemistries available. Furthermore, the thiols enable a good NC dispersion. Document WO 2016/168048 A1 discloses matrix formulations including quantum dots dispersed in a matrix including a cured thiol-alkenyl resin. Document US2017152437A1 relates to a reactive colloidal nanocrystal comprising a core comprising a semiconductive compound, at least one polythiol ligand, and a polymeric matrix. However, degradation caused by photons cannot be prevented completely in combination with state of the art polymeric matrices.

Therefore, there is still a need for polymeric matrices, which provide improved thermal and photo thermal stability to the NCs, while reducing manufacturing costs, and space required in the implementation of the NC composite in a light down-conversion device.

### Short description of the figures

*Figures 1-4* illustrates the performance of nanocomposites containing CdSe/ZnS NC in barrier-free and PET protected configurations (example 4).
*Figures 5-8* illustrates the emission peaks during photothermal and thermal aging for barrier-free nanocomposites containing CdSe/ZnS NC (example 4).
*Figures 9-12* illustrates the emission peaks during photothermal and thermal aging for PET protected nanocomposites containing CdSe/ZnS NC (example 4).

### Summary of the invention

The present invention relates to a nanocrystal composite comprising a plurality of nanocrystals comprising a core comprising a metal or a semiconductive compound or a mixture thereof and at least one ligand, wherein said core is surrounded by at least one ligand, and a polymeric matrix, wherein said polymeric matrix is formed by polymerisation of at least one epoxy compound having a functionality from 2 to 4, a polythiol compound having a functionality from 2 to 10 and a polyisocyanate compound having a functionality from 2 to 4.

The present invention also relates to a cured nanocrystal composite according to the present invention.

The present invention encompasses a product comprising a nanocrystal composite according to the present invention, wherein said product is selected from the group consisting of a display device, a light emitting device, a photovoltaic cell, a photodetector, an energy converter device, a laser, a sensor, a thermoelectric device, a security ink, lighting device and in catalytic or biomedical applications.

The present invention also encompasses the use of a nanocrystal composite according to the present invention as a source of photoluminescence.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

All references cited in the present specification are hereby incorporated by reference in their entirety.

Unless otherwise defined, all terms used in disclosing the invention, including technical and scientific terms, have the meaning as commonly understood by one of the ordinary skill in the art to which this invention belongs to. By means of further guidance, term definitions are included to better appreciate the teaching of the present invention.

The present invention relates to a NC composite comprising an epoxy-polythiourethane matrix, which itself acts as a protection to the NCs. In addition, in some embodiments, the present invention uses thinner, low performance barrier films, in order to further enhance thermal and photothermal properties. Use of low performance barrier films instead of high performance barrier films leads to reduced material and manufacturing costs. Furthermore, less space will be required in the implementation of the NC composite in a light down-conversion device.

The use of an epoxy-polythiourethane matrix according to the present invention provides improved thermal and photothermal stability to NCs and it can be prepared in air.

A NC composite according to the present invention comprises a nanocrystal composite comprising a plurality of nanocrystals comprising a core comprising a metal or a semiconductive compound or a mixture thereof and at least one ligand, wherein said core is surrounded by at least one ligand and a polymeric matrix, wherein said polymeric matrix is formed by polymerisation of at least one epoxy compound having a functionality from 2 to 4, a polythiol compound having a functionality from 2 to 10 and an polyisocyanate compound having a functionality from 2 to 4.

The core of the NCs according to the present invention has a structure including the core alone or the core and one or more shell(s) surrounding the core. Each shell may have a structure comprising one or more layers, meaning that each shell may have monolayer or multilayer structure. Each layer may have a single composition or an alloy or concentration gradient.

Preferably, the size of the core of the NCs according to the present invention is less than 100 nm, more preferably less than 50, more preferably less than 10, however, preferably the core is larger than 1 nm. The particle size is measured by using transmission electron microscopy (TEM).

The shape of the NC can be chosen from a broad range of geometries. Preferably the shape of the core of the NCs according to the present invention is spherical, rectangular, rod or triangle shape.

The core of the NCs comprises a metal or semiconductive compound or a mixture thereof, is composed of elements selected from combination of one or more different groups of the periodic table.

Preferably the metal or semiconductive compound is combination of one or more elements selected from the group IV; one or more elements selected from the groups II and VI; one or more elements selected from the groups III and V; one or more elements selected from the groups IV and VI; one or more elements selected from the groups I and III and VI or a combination thereof.

More preferably the metal or semiconductive compound is selected from the group consisting of Si, Ge, SiC, SiGe, CdS, CdSe, CdTe, ZnS, ZnSe ZnTe, ZnO, HgS, HgSe, HgTe, MgS, MgSe, GaN, GaP, GaSb, AIN, AIP, AlAs, AlSb₃, InN₃, InP, InAs, SnS, SnSe, SnTe, PbS, PbSe, PbTe, CuInS₂, CuInSe₂, CuGaS₂, CuGaSe₂, AgInS₂, AgInSe₂, AgGaS₂, AgGaSe₂ and mixtures thereof. Even more preferably the metal or semiconductive compound is selected from group consisting of CdSe, InP and mixtures thereof.

Above mentioned preferred metal or semiconductive compounds provide better optical properties.

Preferably, NCs according to the present invention have a particle diameter (e.g. largest particle diameter, including core and shell) ranging from 1 nm to 100 nm, preferably from 1 nm to 50 nm and more preferably from 1 nm to 15 nm. The particle size is measured by using transmission electron microscopy (TEM).

In one embodiment, the core of the NCs according to the present invention has a structure comprising a core and at least one monolayer or multilayer shell.

Yet, in another embodiment, the core of the NCs according to the present invention has a structure comprising a core and at least two monolayer and/or multilayer shells.

The shell comprises also a metal or semiconductor material, and therefore, all material listed above to be suitable for use as a core is also suitable for use as a shell material. In one preferred embodiment the shell comprises ZnS, ZnSe or CdS.

In one embodiment according to the present invention, the NCs may be further encapsulated in inorganic oxide shells, such as silica or alumina to protect NCs from air and moisture.

The core (including the shell layer(s) if present) of the NCs is surrounded by at least one ligand. Preferably, the whole surface of the NCs is covered by ligands. It is believed by the theory that when the whole surface of the NC is covered by ligands the optical performance of the NC is better.

Suitable ligands for use in the present invention are alkyl phosphines, alkyl phosphine oxides, amines, thiols, polythiols, carboxylic acids and similar compounds and mixtures thereof.

Examples of suitable alkyl phosphines for use in the present invention as a ligand are tri-n-octylphosphine, trishydroxylpropylphosphine, tributylphosphine, tri(dodecyl)phosphine, dibutyl-phosphite, tributyl phosphite, trioctadecyl phosphite, trilauryl phosphite, tris(tridecyl) phosphite, triisodecyl phosphite, bis(2-ethylhexyl)phosphate, tris(tridecyl) phosphate and mixtures thereof.

Example of suitable alkyl phosphine oxides for use in the present invention as a ligand is tri-n-octylphosphine oxide.

Examples of suitable amines for use in the present invention as a ligand are oleylamine, hexadecylamine, octadecylamine, bis(2-ethylhexyl)amine, dioctylamine, trioctylamine, octylamine, dodecylamine/laurylamine, didodecylamine, tridodecylamine, dioctadecylamine, trioctadecylamine, poly(propylene glycol) bis(2-amino propyl ether) and mixtures thereof.

Example of a suitable thiol for use in the present invention as a ligand is 1-dodecanethiol.

Examples of suitable polythiols for use in the present invention as a ligand are pentaerythritol tetrakis (3-mercaptobutylate), pentaerythritol tetrakis(3-mercaptopropionate), trimethylolpropane tri(3-mercaptopropionate), tris[2-(3-mercaptopropionyloxy) ethyl]isocyanurate, dipenta- erythritol hexakis(3-mercaptopropionate), ethoxilatedtri-methylolpropan tri-3-mercapto-propionate and mixtures thereof.

Thiols can also be used in the present invention in their deprotonated form.

Examples of suitable carboxylic acids and phosphonic acids for use in the present invention as a ligand are oleic acid, phenylphosphonic acid, hexylphosphonic acid, tetradecylphosphonic acid, octylphosphonic acid, octadecylphosphonic acid, propylenediphosphonic acid, phenylphosphonic acid, aminohexylphosphonic acid and mixtures thereof.

Carboxylic acids and phosphonic acids can also be used in the present invention in their deprotonated form.

Examples of other suitable ligands for use in the present invention are dioctyl ether, diphenyl ether, methyl myristate, octyl octanoate, hexyl octanoate, pyridine and mixtures thereof.

Suitable and selected ligands stabilize the NCs in a solution.

The NCs suitable for use in the present invention are prepared by using known processes from the literature or acquired commercially. Suitable NCs can be prepared in several ways of mixing all reactants together. The NCs according to the present invention can be produced from the various core materials alone or combined with various shell materials and various different kind of ligands.

Suitable commercially available NC for use in the present invention include, but not limited to CdSeS/ZnS from Sigma Aldrich.

A NC composite according to the present invention comprises the NCs from 0.01 to 10% by weight of the total weight of the NC composite, preferably from 0.05 to 7.5%, more preferably from 0.1 to 5%.

NC composites according to the present invention can also be prepared with higher NC quantity, however, if the quantity is >10% the optical properties of the QDs will be negatively affected due to interactions between them. On the other hand if the quantity is <0.01%, the formed films would exhibit very low brightness.

According to the present invention NCs are embedded into the polymeric matrix. Suitable polymeric matrix for the present invention is epoxy-polythiourethane matrix. The polymeric matrix according to the present invention is formed by polymerisation of at least one epoxy compound having a functionality from 2 to 4, a polythiol compound having a functionality from 2 to 10 and a polyisocyanate compound having a functionality from 2 to 4.

The thiourethane component of the polymer is formed by thermal or UV nucleophilic addition of polythiols to polyisocyanates. The epoxy-thiol component of the polymer is formed by thermal or UV thiol-epoxy ring-opening coupling reaction. The use of thiourethane matrices provides improved thermal and photothermal stability to the nanocrystals (NC). Moreover, the incorporation of a polyepoxide into the polymer matrix enables the modification of its mechanical properties. Both UV polymerization reactions are induced by the use of the (photo-latent) base catalyst. The main polymerization reactions are illustrated in the following scheme

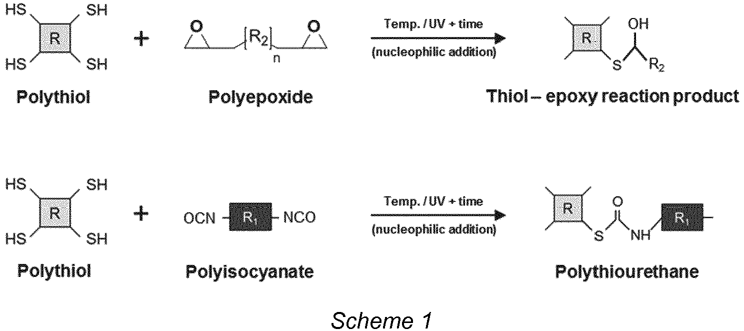

An epoxy-polythiourethane matrix according to the present invention is formed from epoxy compound having a functionality from 2 to 4, preferably functionality from 2 to 3. Functionality from 2 to 3 is preferred because this provides ideal growth and crosslinking and these epoxy compounds provide excellent thermal stability.

Suitable epoxy compound for use in the present invention is selected from the group consisting of 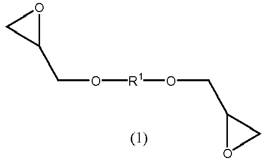 wherein R¹ is selected from the group consisting of a substituted or unsubstituted C1-C30 alkyl group, a substituted or unsubstituted C3-C30 cycloalkyl group, a substituted or unsubstituted aryl group, a substituted or unsubstituted C7-C30 alkylaryl group, a substituted or unsubstituted C3-C30 heterocycloalkyl group and a substituted or unsubstituted C1-C30 heteroalkyl group, 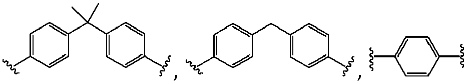 and 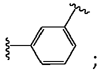 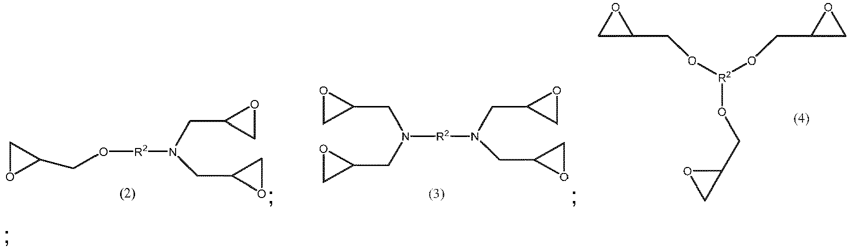 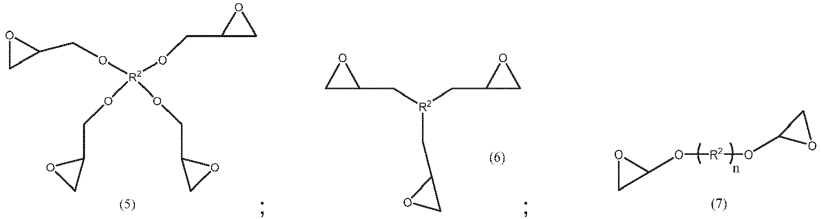 wherein R² is selected from the group consisting of a substituted or unsubstituted C1-C30 alkyl group, a substituted or unsubstituted C3-C30 cycloalkyl group, a substituted or unsubstituted aryl group, a substituted or unsubstituted C7-C30 alkylaryl group, a substituted or unsubstituted C3-C30 heterocycloalkyl group and a substituted or unsubstituted C1-C30 heteroalkyl group; and n is an integer from 1 to 30; 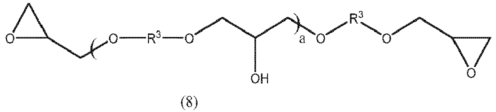 wherein a is 2 - 10, preferably 4 - 6 and R³ is selected from 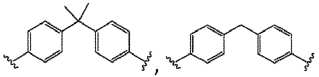 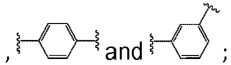 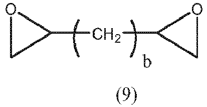 wherein b is 2 - 10, preferably 4 - 6, more preferably b is 4; 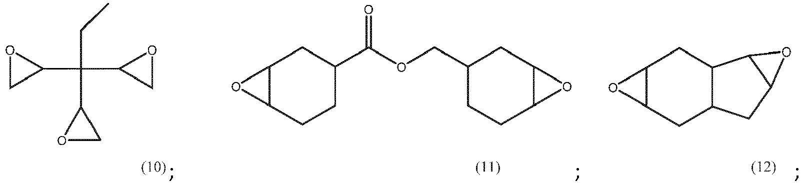 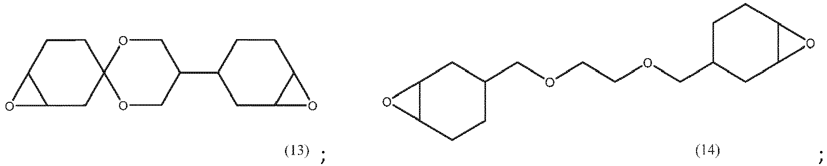 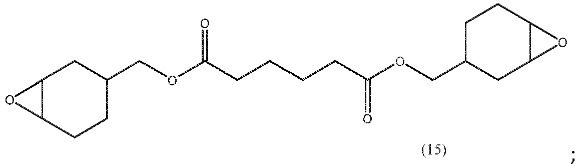 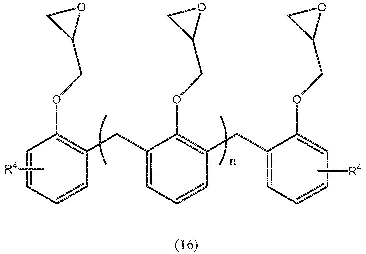 wherein R⁴ is selected independently from the group consisting of hydrogen, halogen, alkyl and alkenyl; and n is an integer from 1 to 10; 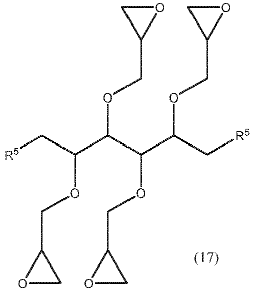 wherein R⁵ is selected independently from the group consisting of hydrogen, hydroxyl, halogen, C1-C30 alkyl and C2-C30 alkenyl; 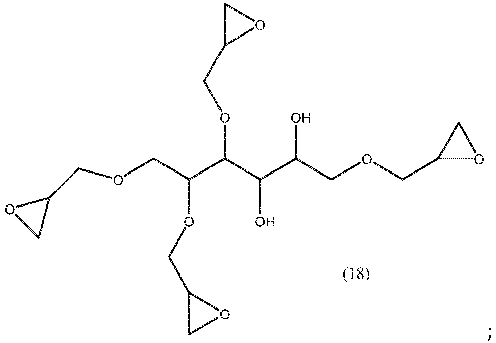 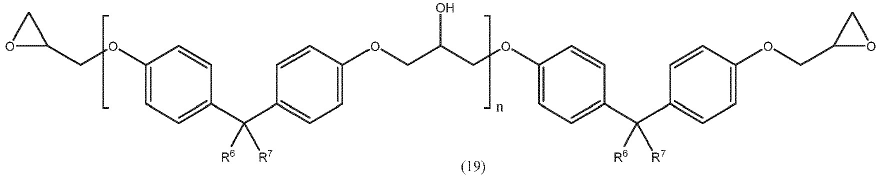 wherein R⁶ and R⁷ are substituted or unsubstituted monovalent hydrocarbon groups or alkoxy groups and n is an integer from 0 to 16; and mixtures thereof.

Preferably, suitable epoxy compound is selected from the group consisting of 1,4-cyclohexanedimethanol diglycidyl ether, dipropylene glycol diglycidyl ether, polyglycerol-3-polyglycidyl ether, triglycidyl of meta-aminophenol, triglycidyl of para-aminophenol, reaction product of epichlorohydrin and dipropylene glycol, reaction product of epichlorohydrin and polypropylene glycol, polyethylene glycol diglycidyl ether, ethylene glycol diglycidyl ether and mixtures thereof.

Suitable commercially available epoxy compounds for use in the present invention include, but not limited to Erisys G-22, Erisys G-23, Erisys G-38 and Erisys EDGE from CVC Thermoset Specialties; Araldite MY 0610 and Araldite MY 0510 from Huntsman; DER 732 and DER 736 from Sigma-Aldrich; and diepoxy PEG from Sigma-Aldrich.

An epoxy-polythiourethane matrix according to the present invention comprises epoxy compound from 5 to 50% by weight by total weight of the polymeric matrix, preferably from 7.5 to 45% and more preferably from 10 to 40%.

When the quantity of epoxy compound is between 5 and 50% ideal mechanical, thermal and photothermal properties are provided.

An epoxy-polythiourethane matrix according to the present invention is formed from polythiol compounds having a functionality from 2 to 10, preferably from 2 to 6, more preferably from 2 to 4. Functionality between 2 and 4 provides ideal crosslinking degree for the polymer.

Suitable polythiol compound for use in the present invention is selected from the group consisting of 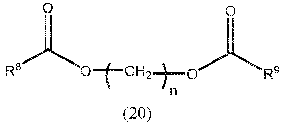 wherein n is 2 - 10, R⁸ and R⁹ are same or different and are independently selected from-CH₂-CH(SH)CH₃ and -CH₂-CH₂-SH; 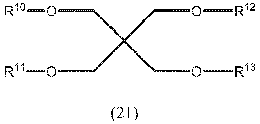 wherein R¹⁰, R¹¹, R¹² and R¹³ are same or different and are independently selected from-C(O)-CH₂-CH₂-SH, -C(O)-CH₂-CH(SH)CH₃, -CH₂-C(-CH₂-O-C(O)-CH₂-CH₂-SH)₃-C(O)-CH₂-SH, -C(O)-CH(SH)-CH₃; 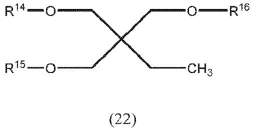 wherein R¹⁴, R¹⁵ and R¹⁶ are same or different and are independently selected from -C(O)-CH₂-CH₂-SH, -C(O)-CH₂-CH(SH)CH₃, -[CH₂-CH₂-O-]ₒ-C(O)-CH₂-CH₂-SH, -C(O)-CH₂-SH, -C(O)-CH(SH)-CH₃ and o is 1-10; 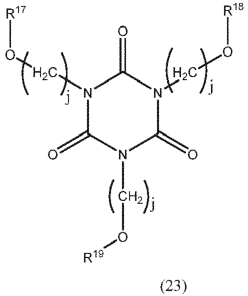 wherein j is 2-10, R¹⁷, R¹⁸ and R¹⁹ are same or different and independently selected from-CH₂-CH₂SH, -CH₂-CH(SH)CH₃, -C(O)-CH₂-SH, -C(O)-CH(SH)-CH₃ and mixtures thereof.

More preferably polythiol is selected from the group consisting of glycol di(3-mercaptopropionate), pentaerythritol tetrakis (3-mercaptobutylate). 1,3,5-tris(3-mercaptobutyloxethyl)-1,3,5-triazine-2,4,6(1H,3H,5H)-trione, 1,4-bis (3-mercaptobutylyloxy) butane, tris[2-(3-mercaptopropionyloxy)ethyl]isocyanurate, pentaerythritol tetra(3-mercaptopropionate), trimethylolpropane tris(3-mercaptopropionate), trimethylolpropane tris(3-mercaptobutyrate) ethoxylated-trimethylolpropan tri-3-mercaptopropionate, dipentaerythritol hexakis (3-mercaptopropionate) and mixtures thereof.

Preferred thiol compounds are desired due the fact that they provide appropriate viscosity and curing speed (within minutes to 3 hours). In addition, preferred polythiol compounds in combination with selected polyisocyates and NCs result in a film with the desired mechanical properties - a film, which is not too brittle or rubbery.

Suitable commercially available polythiol compounds for use in the present invention include, but not limited to KarenzMT™PE1 from Showa Denko and Thiocure®PETMP from Bruno Bock.

An epoxy-polythiourethane matrix according to the present invention comprises polythiol compound from 30 to 80% by weight by total weight of the polymeric matrix, preferably from 40 to 75% and more preferably from 50 to 70%.

When the quantity of polythiol compound is between 30 and 80% ideal mechanical, thermal and photothermal properties are provided.

An epoxy-polythiourethane matrix according to the present invention is formed from polyisocyanate compound having a functionality from 2 to 4.

Suitable polyisocyanate compounds for use in the present invention are selected from polyisocyanates based on isocyanate compounds selected from the group consisting of 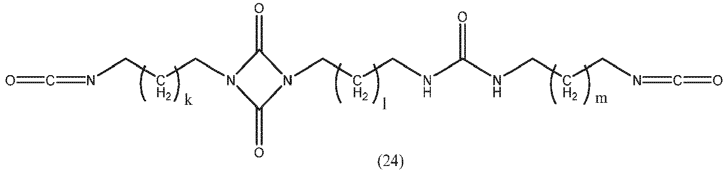 wherein k, I and m are same or different and have a value 2-10; 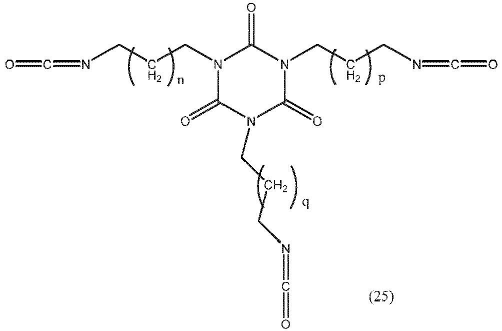 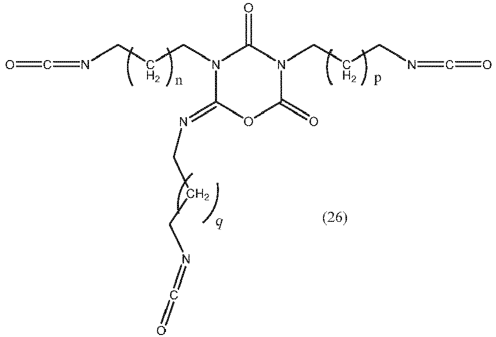 wherein n, p and q are same or different and have a value 2-10, preferably n, p and q are 6; 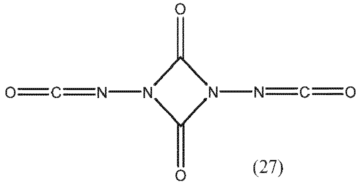 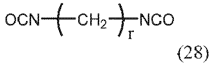 wherein r has a value 2 - 10; 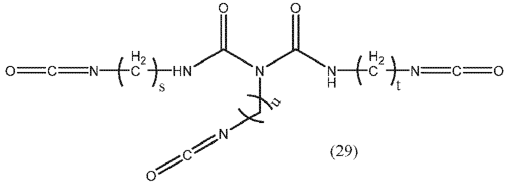 wherein s, t and u are same or different and have a value 2-10, preferably a value 4-6, and more preferably s, t and u are 6;
polyisocyanates based on toluene diisocyanate; polyisocyanates based on methylene diphenyl diisocyanate; polyisocyanates based on isophorone diisocyanate; prepolymers based on toluene diisocyanate; prepolymers based on methylene diphenyl diisocyanate; prepolymers based on isophorone diisocyanate, prepolymers based on hexamethylene diisocyanate and mixtures thereof.

Preferably, suitable polyisocyanate compound is based on isocyanate selected from the group consisting of 2,2'-diphenylmethane diisocyanate, 2,4'- diphenylmethane diisocyanate, 4,4'- diphenylmethane diisocyanate, 4,4'-diisocyanatodicyclohexylmethane, 1,6'-hexamethylene diisocyanate, 2,4'-diisocyanatotoluene, 2,6'-diisocyanatotoluene, and mixtures thereof. Particularly preferred diisocyanate is 1,6'-hexamethylene diisocyanate.

Above mentioned isocyanates are preferred because they are clear and colourless and do not tend to turn yellow over the period of time.

Polyisocyanate compound based on hexamethylene diisocyanate (HDI), formula (28) wherein r is 6, is preferred, because polyisocyanates based on HDI are solvent-free, have a low viscosity, provide fast curing speed and desired mechanical properties. In addition, polyisocyanates based on HDI are transparent, and therefore, suitable and desired for use in NC composites, wherein good optical properties are required.

Suitable commercially available polyisocyanate compounds for use in the present invention include, but not limited to Desmodur N3200, Desmodur N3900 and Desmodur XP2860, from Covestro, formerly Bayer MaterialScience.

An epoxy-polythiourethane matrix according to the present invention comprises polyisocyanate compound from 5 to 50% by weight by total weight of the polymeric matrix, preferably from 7.5 to 45% and more preferably from 10 to 40%.

When the quantity of polyisocyanate compound is greater than 50% the pot-life will be negatively affected, whereas the quantity is less than 5% the stability is negative effected. In a preferred embodiment the final mol% ratio of polythiourethane : epoxy-thiol : excess thiol in a polymeric matrix according to the present invention is 60:30:10.

A NC composite according to the present invention comprises polymer matrix from 90 to 99.99% by weight of the total weight of the composite, preferably from 92.5 to 99.95%, more preferably from 95 to 99.9%.

The Applicant has found out that combination of selected polythiol and polyisocyanate compounds provide a good performance polythiourethanes. Selected epoxies act as a reactive diluent and have a positive effect on viscosity and surface tension. In addition, they improve mechanical properties of the cured polymeric matrix. The overall combination of selected components used in the polymeric matrix according to the present invention provide good mechanical properties and good thermal and photothermal stability to the NCs.

The NC composites according to the present invention may be cured by an UV cure. In one embodiment, the NC composite is cured via UV cure in the presence of a photolatent base.

The NC composites according to the present invention may further comprise a photolatent base.

Suitable photolatent bases for use in the present invention are for example 1,5,7-triazabicyclo[4.4.0]dec-5-ene · hydrogen tetraphenyl borate (TBD·HBPh₄), 2-benzyl-2-(dimethylamino)-1-(4-methoxyphenyl)butan-1-one, 2-benzyl-2-dimethylamino-4'-morpholinobutyrophenone or 2-dimethylamino-2-(4-methyl-benzyl)-1-(4-morpholin-4-yl-phenyl)-butan-1-one.

Suitable commercially available photolatent base for use in the present invention include, but not limited to 2-benzyl-2-(dimethylamino)-1-(4-methoxyphenyl)butan-1-one (Pix 15-080), 2-benzyl-2-dimethylamino-4'-morpholinobutyrophenone (Omnirad 369) or 2-dimethylamino-2-(4-methyl-benzyl)-1-(4-morpholin-4-yl-phenyl)-butan-1-one (Omnirad 379), all from IGM.

A NC composite according to the present invention may comprise a photolatent base from 0 to 5% by weight of the total weight of the NC composite, preferably from 0.01 to 5%, more preferably from 0.01 to 3% and more preferably from 0.01 to 2%.

The NC composite according to the present invention may further comprise an accelerator to accelerate the polymerisation reaction.

Suitable accelerator for use in the present invention is a base, preferably an organic base such as diethylamine and triethylamine.

Suitable commercially available accelerator for use in the present invention include, but not limited to diethylamine or triethylamine from Sigma-Aldrich.

A NC composite according to the present invention may comprise an accelerator from 0 to 5% by weight of the total weight of the NC composite, preferably from 0.001 to 5%, more preferably from 0.01 to 3% and more preferably from 0.01 to 2%.

The NC composites according to the present invention can be prepared in several ways of mixing all ingredients together.

In one embodiment, the preparation of the NC composites according to the present invention comprises following steps:
1) mixing NCs and polyisocyanate compounds;
2) adding polythiol and epoxy compounds and mixing;
3) curing with UV light and/or temperature.

In another embodiment, the preparation of the NC composites according to the present invention comprises following steps:
1) mixing NCs, epoxy and polythiol compounds;
2) adding polyisocyanate compound and mixing;
3) curing with UV light and/or temperature.

Yet, in another embodiment, the preparation of the NC composites according to the present invention comprises following steps:
1) mixing polyisocyanate, epoxy and polythiol compounds;
2) adding NCs and mixing;
3) curing with UV light and/or temperature.

In preferred embodiment, NCs are added to a mixture of epoxy, polythiol and polyisocyanate compounds and cured by UV light.

Photo curing UV intensity is preferably from 1 to 1000 mW/cm², more preferably from 50 to 500 mW/cm². In addition, photo curing time is preferably from 1 second to 500 seconds, more preferably from 1 second to 60 seconds.

If the temperature is used to cure the composition according to the present invention, thermal curing temperature is preferably from 20 °C to 250 °C, more preferably from 80 °C to 125 °C. In addition, thermal curing time is preferably from 1 minute to 48 hour, more preferably from 1 minute to 24 hours and even more preferably from 5 minutes to 3 hours.

As shown in the examples below, the epoxy-polythiourethane matrix provides improved thermal and photo thermal stability when compared to prior art. This can be attributed to their better stability against oxidation during the accelerated operating conditions, opening the possibility to reduce the barrier requirements towards a barrier-free configuration.

In one embodiment according to the present invention, the NC composite may form a layered film together with barrier films - meaning that the NC composite is embedded between two barrier films. Instead of using high quality, sophisticated barrier films as described in the prior art, the Applicant has found out that the NC composites according to the present invention perform well with low performance barrier films, such as PET barrier films. Food grade PET barrier films are suitable and preferred due the fact that they are thin enough. Ordinary PET barrier films can be used but are not desired due their thickness. Use of thin, food grade PET barrier films reduces material and manufacturing costs. Furthermore, less space will be required in the implementation of the NC composite in a light down-conversion device.

The present invention also covers a cured NC composite according to the present invention.

NC composites according to the present invention are solid at room temperature after the cure.

A NC-composite according to the present invention have NCs embedded into the polymer matrix. NCs are solid and integral part of the network structure. The structure allows maintenance of the optical properties of the NCs. In addition, the structure provides improved thermal and photothermal stability. Generally, the epoxy-polythiourethane matrix according to the present invention provides improved protection against oxidation and/or other degradation processes vs. polymeric matrices described in the literature.

The NC composite according to the present invention can be used in various products. Some examples are for example a display device, a light emitting device, a photovoltaic cell, a photodetector, an energy converter device, a laser, a sensor, a thermoelectric device, a security ink, lighting device and in catalytic or biomedical applications.

The NC composite according to the present invention can be used as a source of photoluminescence.

### Examples

### Example 1 - CdSe/ZnS in epoxy-thiourethane matrices with tetra-functional epoxide

### 1.1 Epoxy-thiourethane matrix with (CdSe/ZnS λₑₘ: 626 nm):

0.11 g (7.14 wt.%) of semiconductor NC (CdSe/ZnS λₑₘ: 626 nm from Sigma Aldrich), 1.19 g (56.7 wt.%) of tris[2-(3-mercaptopropionyloxy) ethyl] isocyanurate (Thiocure TEMPIC, from Bruno Bock), 0.71 g (33.81 wt.%) of sorbitol glycidyl ether (Erysis G-60, from CVC Thermoset Specialties), 0.2 g (9.52 wt.%) of aliphatic polyisocyanate (Desmodur N3900, from Covestro), 0.021 g (1 phr) of micronized ZnS (Sachtolith HD-S, from Sachtleben) and 0.001 g (0.05 phr) of photo-latent base (IGM PIX 15-080, from IGM) were mixed in a conditioner container for 6 minutes at 3500 rpms. The mixture was cast between PET films (CT4, from MacDermit) to form a film of 100 µm, which is subsequently UV cured by using a UVALOC 1000 chamber (UVA 400 mJ/cm², UVB 360 mJ/cm² and UVC 90 mJ/cm²). A thermal curing step of 2 hours at 100°C was applied to fully cure the composite. Afterwards, 100 µm barrier free NC composites were obtained by removing PET films.

### 1.2 Epoxy-thiourethane matrix with (CdSe/ZnS λₑₘ: 525 nm):

Same procedure as 1.1 but using CdSe/ZnS emitting at 525 nm as NC source.

All NC composites (sample diameter 1.9 cm) were thermally and photothermally aged to follow their photoluminiscent QY evolution. Photothermal aging was performed by placing the NC composite samples in a custom-built photothermal aging chamber at 350 mW/cm² for 14 days. The measured values are shown in table 1 below.

The absolute quantum yield is measured by using Absolute quantum yield spectrometer C9920-02G from Hamamatsu Photonics.

**Table 1**

| QY (%) | Day 0 | Day 1 | Day 3 | Day 7 | Day 14 |
|---|---|---|---|---|---|
| λₑₘ: 626 nm | 75.8 | 81.9 | 81.2 | 80.4 | 79 |
| λₑₘ: 525 nm | 60 | 55.2 | 52.2 | 59 | 68.1 |

Another (piece of the film) NC-composite was thermally aged by placing the NC samples in an oven at 85°C for 14 days. The measured values are shown in table 2 below.

**Table 2**

| QY (%) | Day 0 | Day 1 | Day 3 | Day 7 | Day 14 |
|---|---|---|---|---|---|
| λₑₘ: 626 nm | 73.8 | 73.8 | 76.8 | 73.4 | 16.8 |
| λₑₘ: 525 nm | 61.8 | 60.4 | 59 | 55.9 | 12.6 |

### Example 2 - Epoxy influence on thermal stability of epoxy-thiourethane matrices

### 2.1 Epoxy-thiourethane matrix with di-functional epoxide:

0.11 g (7.14 wt.%) of semiconductor NC (CdSe/ZnS λₑₘ: 626 nm, from Sigma Aldrich), 0.95 g (59.4 wt.%) of tris[2-(3-mercaptopropionyloxy) ethyl] isocyanurate (Thiocure TEMPIC, from Bruno Bock), 0.16 g (10 wt.%) of Ethylene glycol diglycidyl ether (Erisys EDGE, from CVC Thermoset Specialties), 0.5 g (31.25 wt.%) of aliphatic polyisocyanate (Desmodur N3200, from Covestro), 0.016 g (1 phr) of micronized ZnS (Sachtolith HD-S, from Sachtleben) and 0.001 g (0.05 phr) of photo-latent base (IGM PIX 15-080, from IGM) were mixed in a conditioner container for 6 minutes at 3500 rpms.

### 2.2 Epoxy-thiourethane matrix with tri-functional epoxide:

0.12 g (7.14 wt.%) of semiconductor NC (CdSe/ZnS λₑₘ: 626 nm, from Sigma Aldrich), 0.95 g (56.5 wt.%) of tris[2-(3-mercaptopropionyloxy) ethyl] isocyanurate (Thiocure TEMPIC, from Bruno Bock), 0.24 g (14.3 wt.%) of Polyglycerol-3-Polyglycidyl Ether (Erisys G-38, from CVC Thermoset Specialties), 0.5 g (29.8 wt.%) of aliphatic polyisocyanate (Desmodur N3200, from Covestro), 0.017 g (1 phr) of micronized ZnS (Sachtolith HD-S, from Sachtleben) and 0.001 g (0.05 phr) of photo-latent base (IGM PIX 15-080, from IGM) were mixed in a conditioner container for 6 minutes at 3500 rpms.

### 2.3 Epoxy-thiourethane matrix with di-functional epoxide:

0.13 g (7.14 wt.%) of semiconductor NC (CdSe/ZnS λₑₘ: 626 nm, from Sigma Aldrich), 0.95 g (50.53 wt.%) of tris[2-(3-mercaptopropionyloxy) ethyl] isocyanurate (Thiocure TEMPIC, from Bruno Bock), 0.43 g (22.87 wt.%) of epoxy resin (DER 732, from Sigma Aldrich), 0.5 g (26.6 wt.%) of aliphatic polyisocyanate (Desmodur N3200, from Covestro), 0.019 g (1 phr) of micronized ZnS (Sachtolith HD-S, from Sachtleben) and 0.001 g (0.05 phr) of photo-latent base (IGM PIX 15-080, from IGM) were mixed in a conditioner container for 6 minutes at 3500 rpms.

### 2.4 Epoxy-thiourethane matrix with short branched di-functional epoxide:

0.12 g (7.14 wt.%) of semiconductor NC (CdSe/ZnS λₑₘ: 626 nm, from Sigma Aldrich), 0.95 g (59 wt.%) of tris[2-(3-mercaptopropionyloxy) ethyl] isocyanurate (Thiocure TEMPIC, from Bruno Bock), 0.17 g (10.5 wt.%) of epoxy resin (DER 736, from Sigma Aldrich), 0.5 g (31 wt.%) of aliphatic polyisocyanate (Desmodur N3200, from Covestro), 0.016 g (1 phr) of micronized ZnS (Sachtolith HD-S, from Sachtleben) and 0.001 g (0.05 phr) of photo-latent base (IGM PIX 15-080, from IGM) were mixed in a conditioner container for 6 minutes at 3500 rpms.

The mixtures were cast between PET films (CT4, from MacDermit) to form a film of 100 µm, which was subsequently UV cured by using a UVALOC 1000 chamber (UVA 400 mJ/cm², UVB 360 mJ/cm² and UVC 90 mJ/cm²). A thermal curing step of 10 min at 80°C was applied to fully cure the composite. Afterwards, 100 µm barrier free NC composites were obtained by removing PET films.
All NC composites (sample diameter 1.9 cm) were thermally aged to follow their photoluminiscent QY evolution. Thermal aging was performed by placing the NC composite samples in an oven 85°C for 20 days. The measured values are shown in table 3 below.

**Table 3**

| QY (%) | Day 0 | Day 1 | Day 2 | Day 6 | Day 10 | Day 20 |
|---|---|---|---|---|---|---|
| Exp 2.1 | 72.1 | 62.7 | 63.4 | 68.5 | 70.8 | 71.7 |
| Exp 2.2 | 76.9 | 64.4 | 67.2 | 63.6 | 56.4 | 35.1 |
| Exp 2.3 | 76.7 | 66.7 | 64.8 | 63.7 | 63.7 | 62.3 |
| Exp 2.4 | 75.1 | 65.1 | 65.9 | 69.9 | 72.2 | 74.5 |

### Example 3 - CdSE/ZnS in epoxy-thiourethane matrices with tetra-functional and di-functional epoxides

### 3.1 Epoxy-thiourethane matrix with short branched, di-functional epoxide:

0.12 g (7.14 wt.%) semiconductor NC (CdSe/ZnS λₑₘ: 626 nm, from Sigma Aldrich), 0.95 g (59 wt. %) of tris[2-(3- mercaptopropionyloxy) ethyl] isocyanurate (Thiocure TEMPIC, from Bruno Bock), 0.5 g (30.67 wt. %) of aliphatic polyisocyanate (Desmodur N3200, from Covestro), 0.17 g (10.56 wt. %) of epoxy resin (DER 736, from Sigma Aldrich), 0.016 g (1 phr) of micronized ZnS (Sachtolith HD-S, from Sachtleben) and 0.001 g (0.05 phr) of photo-latent base (IGM PIX 15-080, from IGM) were mixed in a conditioner container for 6 minutes at 3500 rpms.

### 3.2 Epoxy-thiourethane matrix with di- and tetra-functional epoxides:

0.12 g (7.14 wt.%) semiconductor NC (CdSe/ZnS λₑₘ: 626 nm, from Sigma Aldrich), 0.95 g (59 wt. %) of tris[2-(3- mercaptopropionyloxy) ethyl] isocyanurate (Thiocure TEMPIC, from Bruno Bock), 0.5 g (30.67 wt. %) of aliphatic polyisocyanate (Desmodur N3200, from Covestro), 0.13 g (7.97 wt. %) of epoxy resin (DER 736), 0.05 g (3.1 wt. %) of sorbitol glycidyl ether (Erysis G-60, from CVC Thermoset Specialties) 0.016 g (1 phr) of micronized ZnS (Sachtolith HD- S, from Sachtleben) and 0.001 g (0.05 phr) of photo-latent base (IGM PIX 15-080, from IGM) were mixed in a conditioner container for 6 minutes at 3500 rpms.

The mixtures were cast between PET films (CT4, from MacDermit) to form a film of 100 µm, which was subsequently UV cured by using a UVALOC 1000 chamber (UVA 400 mJ/cm², UVB 360 mJ/cm² and UVC 90 mJ/cm²). A thermal curing step of 10 min at 100°C was applied to fully cure the composite. Afterwards, 100 µm barrier free NC composites were obtained by removing PET films. All NC composites (sample diameter 1.9 cm) were thermally and photothermally aged to follow their photoluminecent QY evolution.

Photothermal aging was performed by placing the samples in a custom-built photothermal aging chamber at 350 mW/cm² for 7 days. The measured values are shown in table 10 below.

**Table 10**

| QY (%) | Day 0 | Day 1 | Day 3 | Day 7 |
|---|---|---|---|---|
| Exp 3.1 | 73.4 | 76.9 | 63.9 | 58.2 |
| Exp 3.2 | 74.9 | 77.8 | 67.4 | 60.3 |

Thermal aging was performed by placing the NC-composite samples in an oven at 85°C for 7 days. The measured values are shown in table 11 below.

**Table 11**

| QY (%) | Day 0 | Day 1 | Day 3 | Day 7 |
|---|---|---|---|---|
| Exp 3.1 | 74.3 | 65.2 | 65.6 | 71.5 |
| Exp 3.2 | 74 | 65.1 | 66.3 | 71.8 |

### Example 4 - barrier free vs PET protected epoxy-thiourethane NC composites

### 4.1 Epoxy-thiourethane matrix with (CdSe/ZnS λₑₘ: 626 nm):

0.12 g (7.14 wt.%) semiconductor NC (CdSe/ZnS λₑₘ: 626 nm, from Sigma Aldrich), 0.95 g (59 wt. %) of tris[2-(3-mercaptopropionyloxy) ethyl] isocyanurate (Thiocure TEMPIC, from Bruno Bock), 0.5 g (31 wt. %) of aliphatic polyisocyanate (Desmodur N3200, from Covestro), 0.17 g (10.56 wt. %) of epoxy resin (DER 736, from Sigma Aldrich), 0.016 g (1 phr) of micronized ZnS (Sachtolith HD-S, from Sachtleben) and 0.001 g (0.05 phr) of photo-latent base (IGM PIX 15-080, from IGM) were mixed in a conditioner container for 6 minutes at 3500 rpms.

### 4.2 Epoxy-thiourethane matrix with (CdSe/ZnS λₑₘ: 525 nm):

Same procedure as 4.1 but using CdSe/ZnS emitting at 525 nm as NC source.

The mixtures were cast between PET films (CT4, from MacDermit) to form a film of 100 µm, which was subsequently UV cured by using a UVALOC 1000 chamber (UVA 400 mJ/cm², UVB 360 mJ/cm² and UVC 90 mJ/cm²). A thermal curing step of 10 min at 80°C was applied to fully cure the composite. The PET films were easily removed after curing the NC composite. Barrier free and PET protected NC composites (sample diameter 1.9 cm) were photothermally and thermally aged to follow their photoluminiscent QY evolution. Photothermal aging was performed by placing the samples in a custom-built photothermal aging chamber at 350 mW/cm² for 14 days. The measured values are shown in tables 4 and 5 below.

**Table 4 barrier free NC composites**

| QY (%) | Day 0 | Day 1 | Day 3 | Day 7 | Day 14 |
|---|---|---|---|---|---|
| Exp 4.1 | 72.7 | 67.6 | 57.9 | 56.5 | 55.3 |
| Exp 4.2 | 53.3 | 15.1 | 10.1 | 2.9 | 2.1 |

**Table 5 PET protected NC composites**

| QY (%) | Day 0 | Day 1 | Day 3 | Day 7 | Day 14 |
|---|---|---|---|---|---|
| Exp 4.1 | 81 | 83.8 | 87.5 | 78 | 79 |
| Exp 4.2 | 61.4 | 60.1 | 69.8 | 68.3 | 64.3 |

Thermal aging was performed by placing the NC composite samples in an oven at 85°C for 7 days. The measured values are shown in tables 6 and 7 below.

**Table 6 barrier free NC composites**

| QY (%) | Day 0 | Day 1 | Day 3 | Day 7 | Day 14 |
|---|---|---|---|---|---|
| Exp 4.1 | 78 | 68.2 | 68.8 | 70.8 | 76.2 |
| Exp 4.2 | 55.1 | 48.2 | 57.4 | 55.3 | 50.1 |

**Table 7 PET protected NC composites**

| QY (%) | Day 0 | Day 1 | Day 3 | Day 7 | Day 14 |
|---|---|---|---|---|---|
| Exp 4.1 | 81,3 | 66.6 | 72 | 68.2 | 79.7 |
| Exp 4.2 | 62.1 | 54.3 | 60.8 | 62.9 | 58.1 |

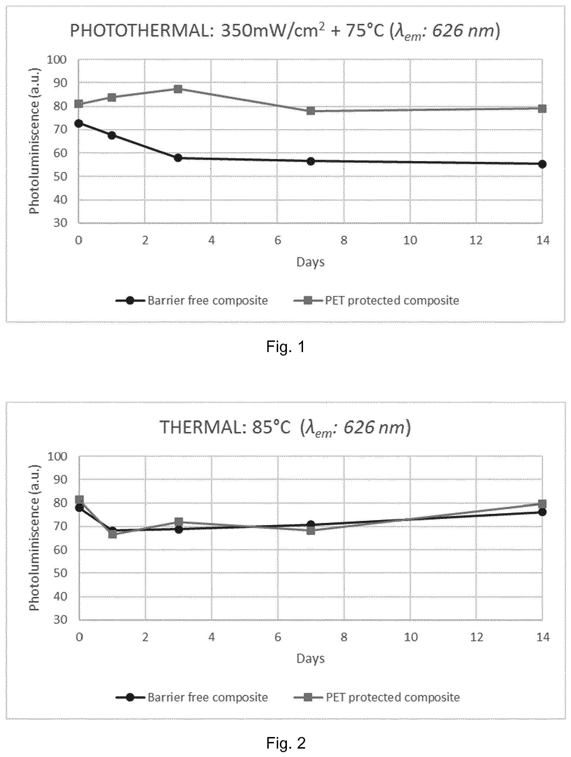

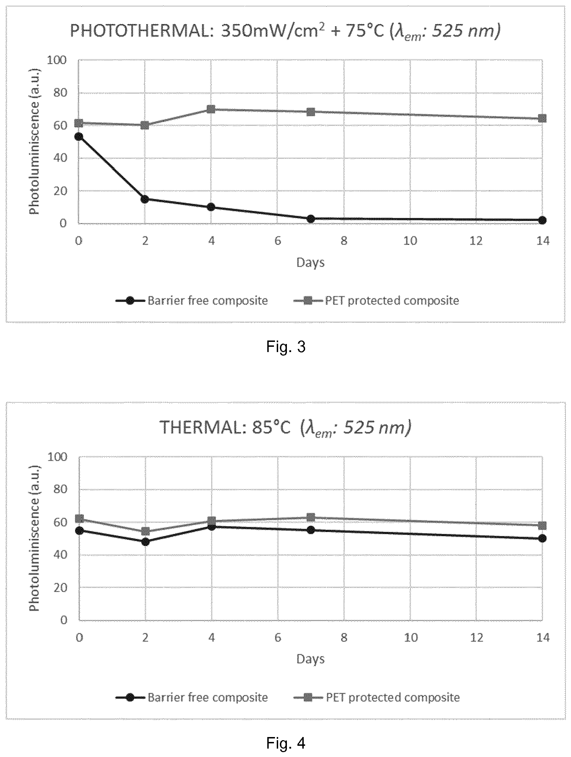

Above results are illustrated in Figures 1-4, showing quantum yield during photothermal and thermal aging for red (4.1) and green (4.2) NCs. Comparison between PET protected and barrier-free is also illustrated in the figures.

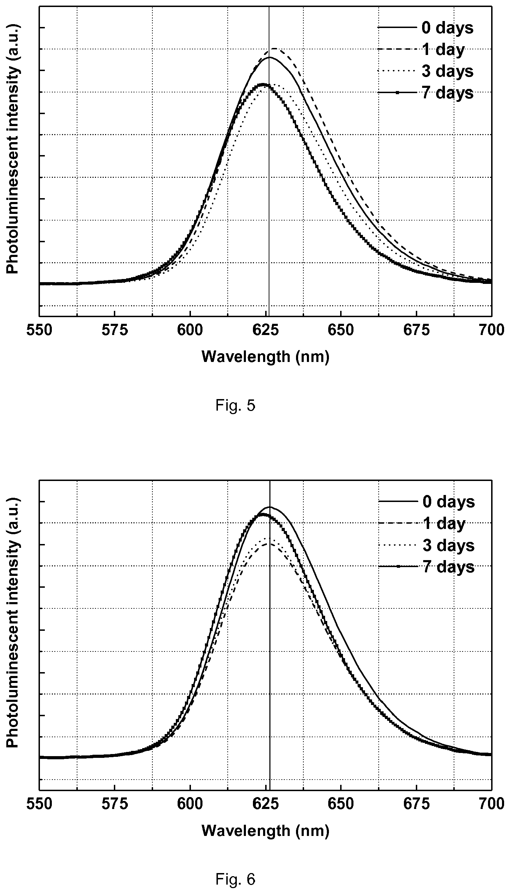

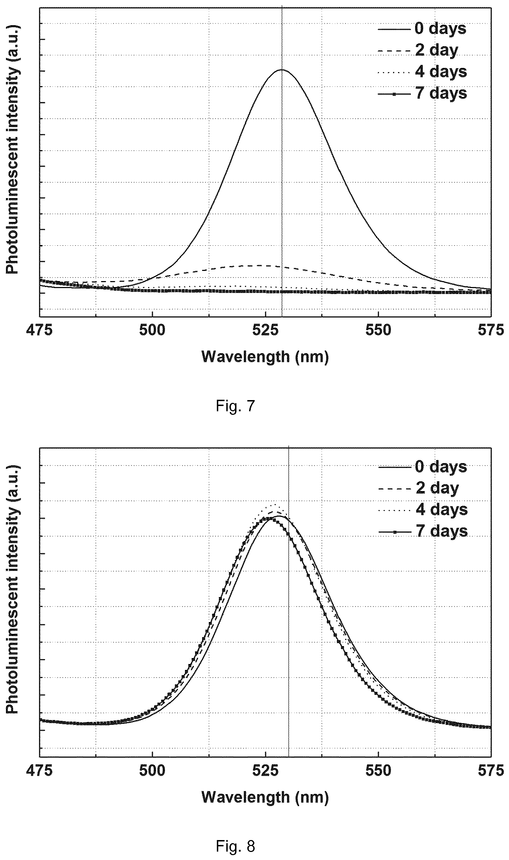

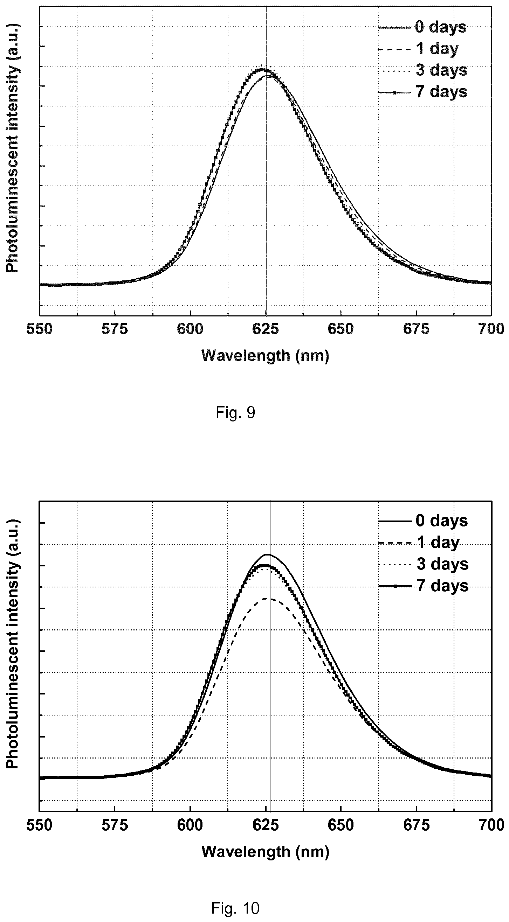

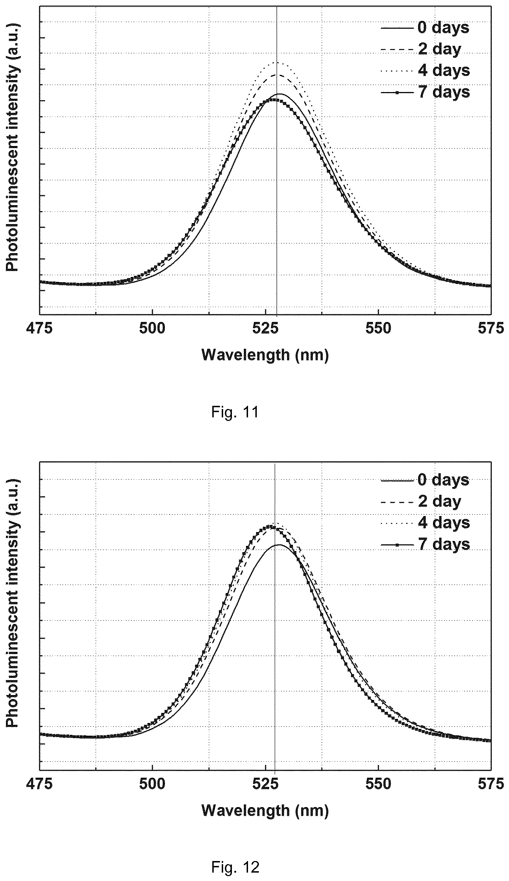

Above results are also illustrated in Figures 5-12. Figures 5 and 6 illustrate emission peaks for barrier free NC composite with red NCs (4.1) (photothermal aging (fig. 5) and thermal aging (fig. 6)). Figures 7 and 8 illustrate emission peaks for barrier free NC composite with green NCs (4.2) (photothermal aging fig. 7 and thermal aging (fig. 8)). Figures 9 and 10 illustrate emission peaks for a PET protected NC composite with red NCs (4.1) (photothermal aging (fig. 9) and thermal aging (fig. 10)). Figures 11 and 12 illustrate emission peaks for a PET protected NC composite with green NCs (4.2) (photothermal aging fig. 11 and thermal aging (fig. 12)).

### Example 5 - Barrier free epoxy-thiourethane vs. epoxy-thiol NC composites

### 5.1 Epoxy-thiourethane matrix with CdSe/ZnS (λₑₘ: 525 nm):

0.11 g (5 phr) of semiconductor NC in IBOA (CdSe/ZnS λₑₘ: 525 nm, from Sigma Aldrich), 1.19 g (54.0 wt.%) of tris[2-(3-mercaptopropionyloxy) ethyl] isocyanurate (Thiocure TEMPIC, from Bruno Bock), 0.71 g (32.1 wt.%) of sorbitol glycidyl ether (Erysis G-60, from CVC Thermoset Specialties), 0.2 g (9.1 wt.%) of aliphatic polyisocyanate (Desmodur N3900, from Covestro), 0.021 g (1 phr) of micronized ZnS (Sachtolith HD-S, from Sachtleben) and 0.003 g (0.15 phr) of photo-latent base (IGM PIX 15-080, from IGM) were mixed in a conditioner container for 6 minutes at 3500 rpms. The mixture was cast between PET films (CT4, from MacDermit) to form a film of 100 µm, which was subsequently UV cured by using a UVALOC 1000 chamber (UVA 400 mJ/cm², UVB 360 mJ/cm² and UVC 90 mJ/cm²). A thermal curing step of 3 hours at 100°C was applied to fully cure the composite. Afterwards, 100 µm barrier free NC composites were obtained by removing PET films.

### 5.2 Epoxy-thiol matrix with CdSe/ZnS (λₑₘ: 525 nm):

0.11 g (5 phr) of semiconductor NC in IBOA (CdSe/ZnS λₑₘ: 525 nm, from Sigma Aldrich), 1.19 g (54.3 wt.%) of tris[2-(3-mercaptopropionyloxy) ethyl] isocyanurate (Thiocure TEMPIC, from Bruno Bock), 0.90 g (40.9 wt.%) of sorbitol glycidyl ether (Erysis G-60, from CVC Thermoset Specialties), 0.021 g (1 phr) of micronized ZnS (Sachtolith HD-S, from Sachtleben) and 0.003 g (0.15 phr) of photo-latent base (IGM PIX 15-080, from IGM) were mixed in a conditioner container for 6 minutes at 3500 rpms. The mixture was cast between PET films (CT4, from MacDermit) to form a film of 100 µm which is then UV cured by using a UVALOC 1000 chamber (UVA 400 mJ/cm², UVB 360 mJ/cm² and UVC 90 mJ/cm²). A thermal curing step of 3 hours at 100°C is applied to fully cure the composite. Afterwards, 100 µm barrier free NC composites were obtained by removing PET films.

Barrier free NC composites (sample diameter 1.9 cm) were photothermally and thermally aged to follow their photoluminiscent QY evolution.

Photothermal aging was performed by placing the samples in a custom-built photothermal aging chamber at 350 mW/cm² + 75°C for 7 days. The measured values are shown in table 8 below.

**Table 8**

| QY (%) | Day 0 | Day 1 | Day 3 | Day 7 |
|---|---|---|---|---|
| Exp 5.1 | 56.2 | 32.6 | 29.6 | 17.2 |
| Exp 5.2 | 55.5 | 31.5 | 27.2 | 0.0 |

Thermal aging was performed by placing the NC composite samples in an oven at 85°C for 7 days. The measured values are shown in table 9 below.

**Table 9**

| QY (%) | Day 0 | Day 1 | Day 3 | Day 7 |
|---|---|---|---|---|
| Exp 5.1 | 54.4 | 55.1 | 52.7 | 26.7 |
| Exp 5.2 | 56.2 | 57.5 | 55.9 | 11.9 |

Example 5 exemplifies that the epoxy-thiourethane according to the present invention functions better (slightly) than the epoxy-thiol.

## Claims

1. A nanocrystal composite comprising
a) a plurality of nanocrystals comprising a core comprising a metal or a semiconductive compound or a mixture thereof and at least one ligand, wherein said core is surrounded by at least one ligand,
b) a polymeric matrix, wherein said polymeric matrix is formed by polymerisation of at least one epoxy compound having a functionality from 2 to 4, a polythiol compound having a functionality from 2 to 10 and a polyisocyanate compound having a functionality from 2 to 4.

2. A nanocrystal composite according to claim 1, wherein said core comprising a metal or semiconductive compound or a mixture thereof is composed of elements selected from combination of one or more different groups of the periodic table, preferably said metal or semiconductive compound is combination of one or more elements selected from the group IV; one or more elements selected from the groups II and VI; one or more elements selected from the groups III and V; one or more elements selected from the groups IV and VI; one or more elements selected from the groups I and III and VI or a combination thereof, more preferably said metal or semiconductive compound is selected from the group consisting of Si, Ge, SiC, SiGe, CdS, CdSe, CdTe, ZnS, ZnSe ZnTe, ZnO, HgS, HgSe, HgTe, MgS, MgSe, GaN, GaP, GaSb, AIN, AIP, AlAs, AlSb₃, InN₃, InP, InAs, SnS, SnSe, SnTe, PbS, PbSe, PbTe, CuInS₂, CuInSe₂, CuGaS₂, CuGaSe₂, AgInS₂, AgInSe₂, AgGaS₂, AgGaSe₂ and mixtures thereof, and even more preferably said metal or semiconductive compound is selected from group consisting of CdSe, InP and mixtures thereof.

3. A nanocrystal composite according to claim 1 or 2, wherein said core comprises a core and at least one monolayer or multilayer shell or wherein said core comprises a core and at least two monolayer and/or multilayer shells.

4. A nanocrystal composite according to any of claims 1 to 3, wherein said epoxy compound is selected from the group consisting of 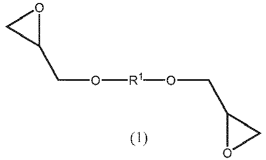 wherein R¹ is selected from the group consisting of a substituted or unsubstituted C1-C30 alkyl group, a substituted or unsubstituted C3-C30 cycloalkyl group, a substituted or unsubstituted aryl group, a substituted or unsubstituted C7-C30 alkylaryl group, a substituted or unsubstituted C3-C30 heterocycloalkyl group and a substituted or unsubstituted C1-C30 heteroalkyl group, 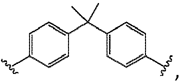 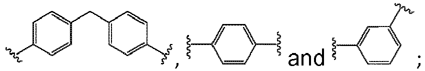 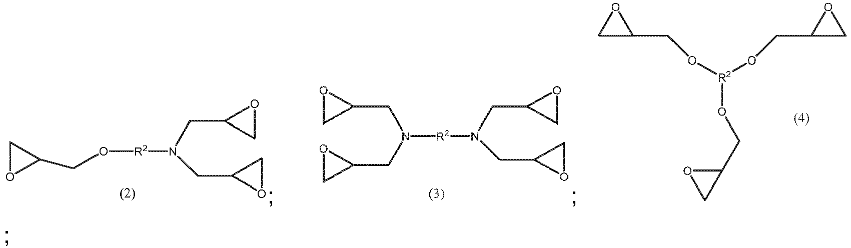 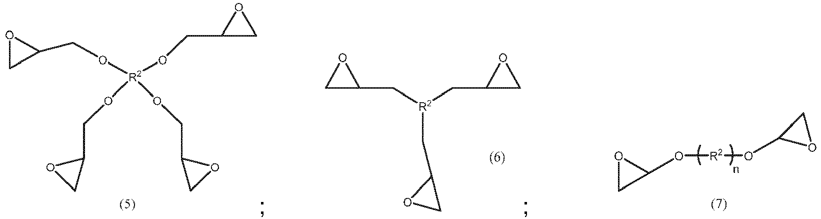 wherein R² is selected from the group consisting of a substituted or unsubstituted C1-C30 alkyl group, a substituted or unsubstituted C3-C30 cycloalkyl group, a substituted or unsubstituted aryl group, a substituted or unsubstituted C7-C30 alkylaryl group, a substituted or unsubstituted C3-C30 heterocycloalkyl group and a substituted or unsubstituted C1-C30 heteroalkyl group; and n is an integer from 1 to 30; 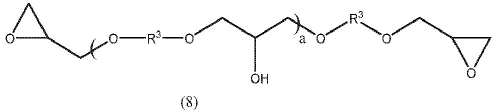 wherein a is 2 - 10, preferably 4 - 6 and R³ is selected from 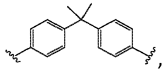 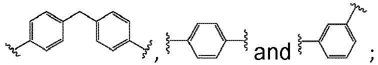 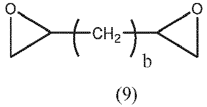 wherein b is 2 - 10, preferably 4 - 6, more preferably b is 4; 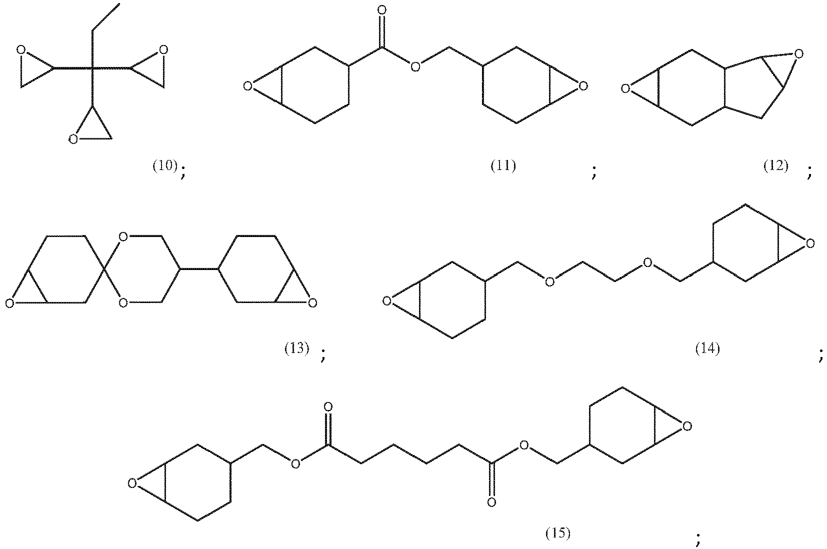 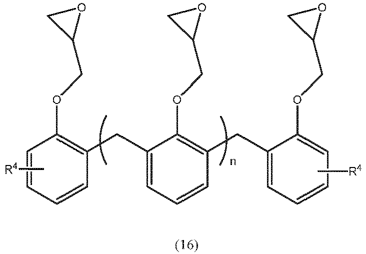 wherein R⁴ is selected independently from the group consisting of hydrogen, halogen, alkyl and alkenyl; and n is an integer from 1 to 10; 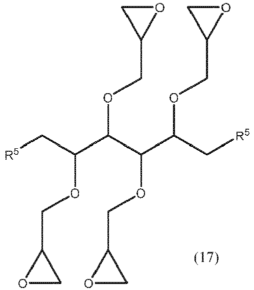 wherein R⁵ is selected independently from the group consisting of hydrogen, hydroxyl, halogen, C1-C30 alkyl and C2-C30 alkenyl; 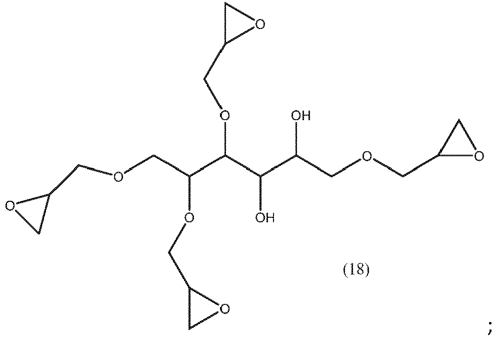 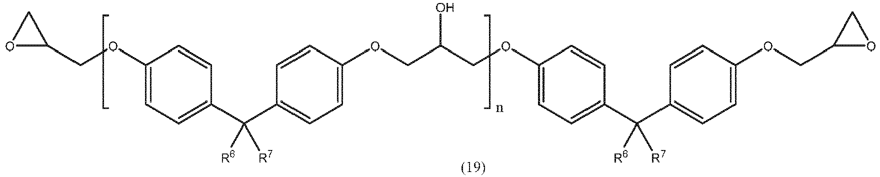 wherein R⁶ and R⁷ are substituted or unsubstituted monovalent hydrocarbon groups or alkoxy groups and n is an integer from 0 to 16;
and mixtures thereof.

5. A nanocrystal composite according to any of claims 1 to 4, wherein said epoxy compound has a functionality from 2 to 3.

6. A nanocrystal composite according to any of claims 1 to 6, wherein said polythiol compound is selected from the group consisting of 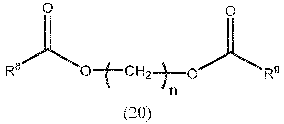 wherein n is 2 - 10, R⁸ and R⁹ are same or different and are independently selected from -CH₂-CH(SH)CH₃ and -CH₂-CH₂-SH; 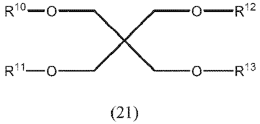 wherein R¹⁰, R¹¹, R¹² and R¹³ are same or different and are independently selected from -C(O)-CH₂-CH₂-SH, -C(O)-CH₂-CH(SH)CH₃, -CH₂-C(-CH₂-O-C(O)-CH₂-CH₂-SH)₃-C(O)-CH₂-SH, -C(O)-CH(SH)-CH₃; 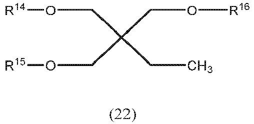 wherein R¹⁴, R¹⁵ and R¹⁶ are same or different and are independently selected from -C(O)-CH₂-CH₂-SH, -C(O)-CH₂-CH(SH)CH₃, -[CH₂-CH₂-O-]ₒ-C(O)-CH₂-CH₂-SH, -C(O)-CH₂-SH, -C(O)-CH(SH)-CH₃ and o is 1-10; 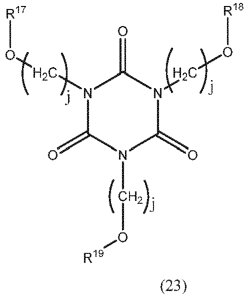 wherein j is 2-10, R¹⁷, R¹⁸ and R¹⁹ are same or different and independently selected from -CH₂-CH₂SH, -CH₂-CH(SH)CH₃, -C(O)-CH₂-SH, -C(O)-CH(SH)-CH₃ and mixtures thereof.

7. A nanocrystal composite according to any of claims 1 to 6, wherein said polythiol compound has a functionality from 2 to 6 and more preferably from 2 to 4.

8. A nanocrystal composite according to any of claims 1 to 7, wherein said polyisocyanates are selected from polyisocyanates based on isocyanate compounds selected from the group consisting of 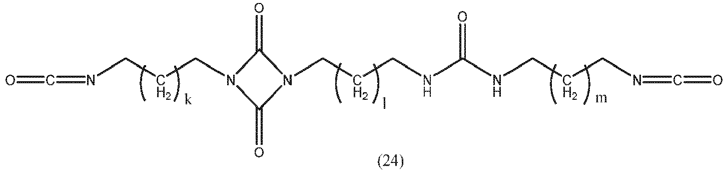 wherein k, I and m are same or different and have a value 2-10; 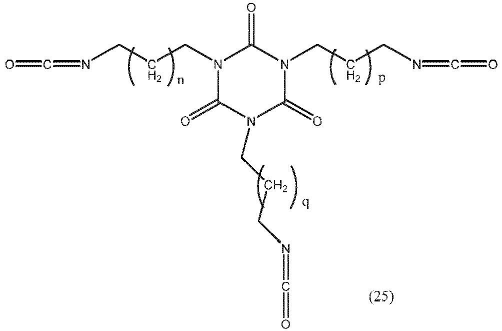 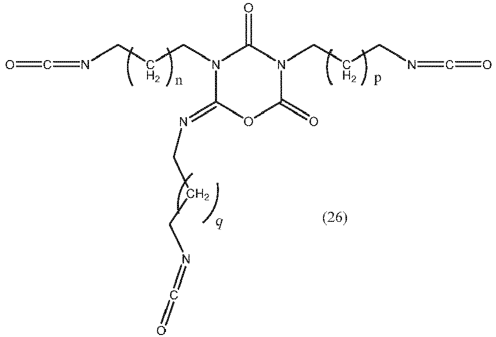 wherein n, p and q are same or different and have a value 2-10, preferably n, p and q are 6; 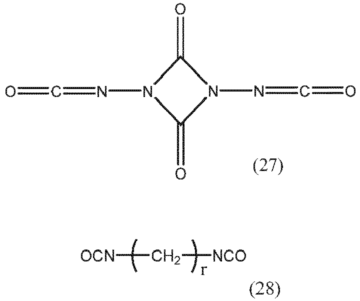 wherein r has a value 2 - 10; 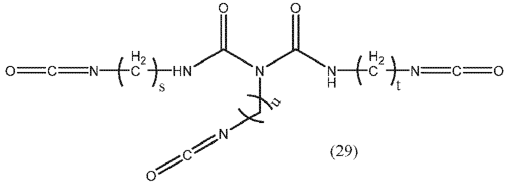 wherein s, t and u are same or different and have a value 2-10, preferably a value 4-6, and more preferably s, t and u are 6;
polyisocyanates based on toluene diisocyanate; polyisocyanates based on methylene diphenyl diisocyanate; polyisocyanates based on isophorone diisocyanate; prepolymers based on toluene diisocyanate; prepolymers based on methylene diphenyl diisocyanate; prepolymers based on isophorone diisocyanate, prepolymers based on hexamethylene diisocyanate and mixtures thereof.

9. A nanocrystal composite according to any of claims 1 to 8, wherein said isocyanate compound has a functionality from 2 to 3.

10. A nanocrystal composite according to any of claims 1 to 9 comprising said nanocrystals from 0.01 to 10% by weight of the total weight of the composite, preferably from 0.05 to 7.5%, more preferably from 0.1 to 5%.

11. A nanocrystal composite according to any of claims 1 to 10 comprising polymer matrix from 90 to 99.99% by weight of the total weight of the composite, preferably from 92.5 to 99.95%, more preferably from 95 to 99.9%.

12. A nanocrystal composite according to any of claims 1 to 11, wherein said polymeric matrix is formed in the presence of a photolatent base from 0.01 to 5% by weight of the total weight of the polymeric matrix, preferably from 0.01 to 3%, more preferably from 0.01 to 2%.

13. A cured nanocrystal composite according to any of claims 1 to 11.

14. A product comprising a nanocrystal composite according to any of claims 1 to 13, wherein said product is selected from the group consisting of a display device, a light emitting device, a photovoltaic cell, a photodetector, an energy converter device, a laser, a sensor, a thermoelectric device, a security ink, lighting device and in catalytic or biomedical applications.

15. Use of nanocrystal composite according to any of claims 1 to 13 as a source of photoluminescence.

## Patentansprüche

1. Nanokristall-Zusammensetzung, umfassend:
a) eine Vielzahl von Nanokristallen, umfassend einen Kern, umfassend ein Metall oder einen halbleitenden Stoff oder ein Gemisch davon und mindestens einen Liganden, wobei der Kern von mindestens einem Liganden umgeben ist,
b) eine Polymermatrix, wobei die Polymermatrix gebildet ist durch eine Polymerisierung von mindestens einem Epoxid mit einer Funktionalität von 2 bis 4, einem Polythiol mit einer Funktionalität von 2 bis 10 und einer Polyisocyanatverbindung mit einer Funktionalität von 2 bis 4.

2. Nanokristall-Zusammensetzung nach Anspruch 1, wobei der Kern, der ein Metall oder einen halbleitenden Stoff oder ein Gemisch davon umfasst, aus Elementen zusammengesetzt ist, die aus einer Kombination einer oder mehrerer verschiedener Gruppen des Periodensystems ausgewählt sind, vorzugsweise ist das Metall oder der halbleitende Stoff eine Kombination eines oder mehrerer Elemente, die aus der Gruppe IV ausgewählt sind; eines oder mehrerer Elemente, die aus den Gruppen II und VI ausgewählt sind; eines oder mehrerer Elemente, die aus den Gruppen III und V ausgewählt sind; eines oder mehrerer Elemente, die aus den Gruppen IV und VI ausgewählt sind; eines oder mehrerer Elemente, die aus den Gruppen I und III und VI oder einer Kombination davon ausgewählt sind, bevorzugt ist das Metall oder der halbleitende Stoff aus der Gruppe ausgewählt, bestehend aus Si, Ge, SiC, SiGe, CdS, CdSe, CdTe, ZnS, ZnSe ZnTe, ZnO, HgS, HgSe, HgTe, MgS, MgSe, GaN, GaP, GaSb, AIN, AIP, AlAs, AlSb₃, InN₃, InP, InAs, SnS, SnSe, SnTe, PbS, PbSe, PbTe, CuInS₂, CuInSe₂, CuGaS₂, CuGaSe₂, AgInS₂, AgInSe₂, AgGaS₂, AgGaSe₂ und Gemischen davon, und noch mehr bevorzugt ist das Metall oder der halbleitenden Stoff aus der Gruppe ausgewählt, bestehend aus CdSe, InP und Gemischen davon.

3. Nanokristall-Zusammensetzung nach Anspruch 1 oder 2, wobei der Kern einen Kern und mindestens eine einschichtige oder mehrschichtige Hülle umfasst, oder wobei der Kern einen Kern und mindestens zwei einschichtige und/oder mehrschichtige Hüllen umfasst.

4. Nanokristall-Zusammensetzung nach einem beliebigen der Ansprüche 1 bis 3, wobei das Epoxid aus der Gruppe ausgewählt ist, die besteht aus: 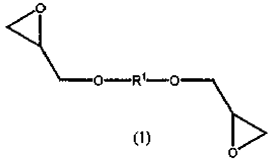 wobei R¹ aus der Gruppe gewählt ist, bestehend aus einer substituierten oder unsubstituierten C1-C30-Alkylgruppe, einer substituierten oder unsubstituierten C3-C30-Cycloalkylgruppe, einer substituierten oder unsubstituierten Arylgruppe, einer substituierten oder unsubstituierten C7-C30-Alkylarylgruppe, einer substituierten oder unsubstituierten C3-C30- Heterocycloalkylgruppe und einer substituierten oder unsubstituierten C1-C30-Heteroalkylgruppe, 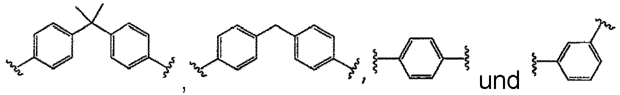 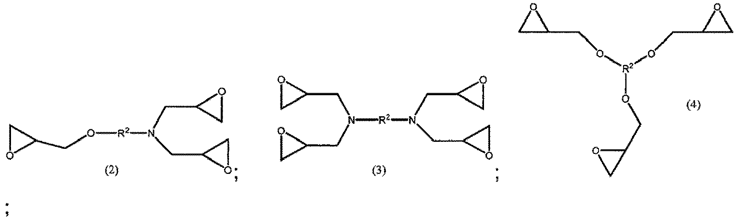 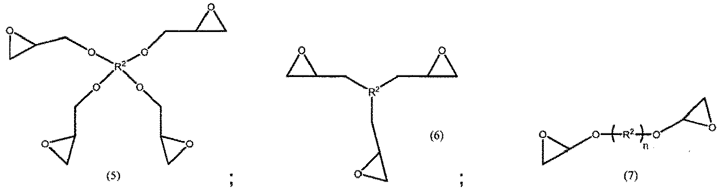 wobei R² aus der Gruppe ausgewählt ist, bestehend aus einer substituierten oder unsubstituierten C1-C30-Alkylgruppe, einer substituierten oder unsubstituierten C3-C30-Cycloalkylgruppe, einer substituierten oder unsubstituierten Arylgruppe, einer substituierten oder unsubstituierten C7-C30-Alkylarylgruppe, einer substituierten oder unsubstituierten C3-C30-Heterocycloalkylgruppe und einer substituierten oder unsubstituierten C1-C30-Heteroalkylgruppe; und n eine ganze Zahl von 1 bis 30 ist; 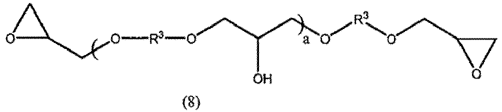 wobei a 2 bis 10 ist, vorzugsweise 4 bis 6, und R³ gewählt ist aus 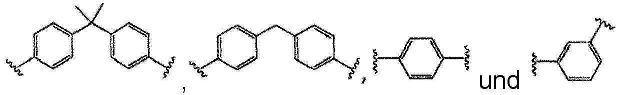 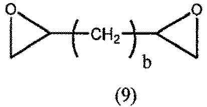 wobei b 2 bis 10 ist, vorzugsweise 4 bis 6, bevorzugt b gleich 4 ist; 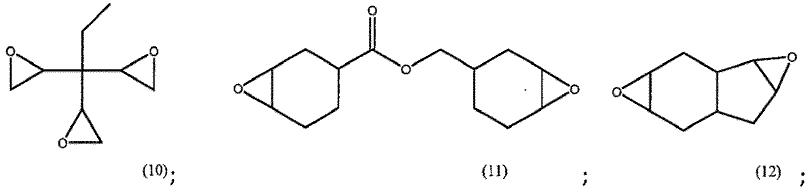 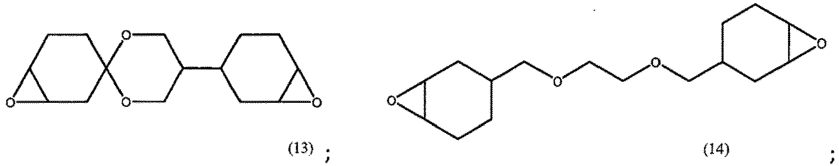 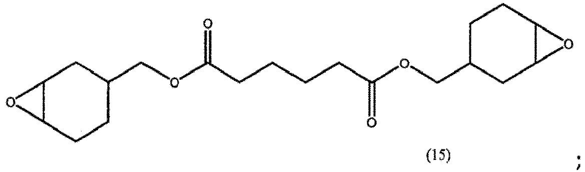 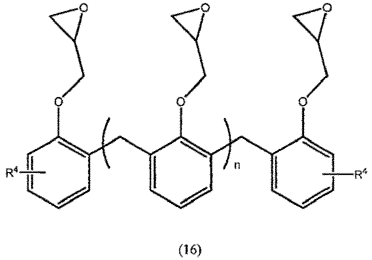 wobei R⁴ unabhängig aus der Gruppe ausgewählt ist, bestehend aus Wasserstoff, Halogen, Alkyl und Alkenyl; und n eine ganze Zahl von 1 bis 10 ist; 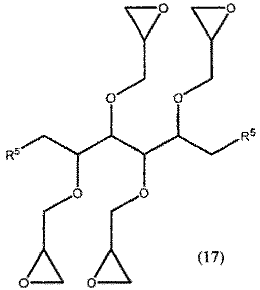 wobei R⁵ unabhängig aus der Gruppe ausgewählt ist, bestehend aus Wasserstoff, Hydroxyl, Halogen, C1-C30-Alkyl und C2-C30-Alkenyl; 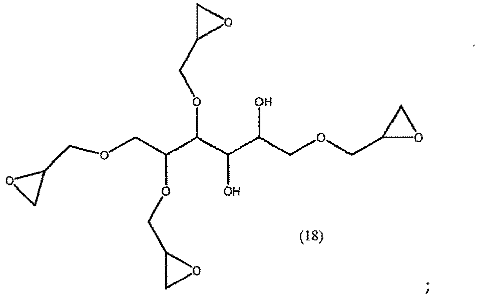 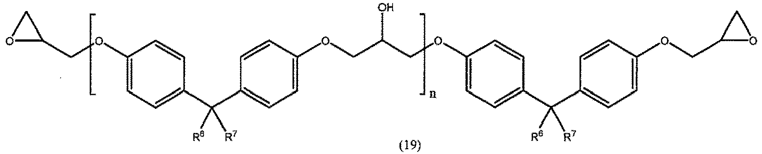 wobei R⁶ und R⁷ substituierte oder unsubstituierte monovalente Kohlenwasserstoffgruppen oder Alkoxygruppen sind und n eine ganze Zahl von 0 bis 16 ist;
und Gemische davon.

5. Nanokristall-Zusammensetzung nach einem beliebigen der Ansprüche 1 bis 4, wobei das Epoxid eine Funktionalität von 2 bis 3 aufweist.

6. Nanokristall-Zusammensetzung nach einem beliebigen der Ansprüche 1 bis 6, wobei das Polythiol aus einer Gruppe ausgewählt ist, bestehend aus 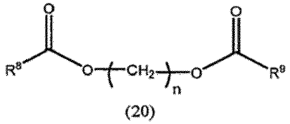 wobei n 2 bis 10 ist, R⁸ und R⁹ gleich oder unterschiedlich sind und unabhängig ausgewählt sind aus -CH₂-CH(SH)CH₃ und-CH₂-CH₂-SH; 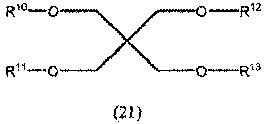 wobei R¹⁰, R¹¹, R¹² und R¹³ gleich oder unterschiedlich sind und unabhängig ausgewählt sind aus -C(O)-CH₂-CH₂-SH, -C(O)-CH₂-CH(SH)CH₃, -CH₂-C(-CH₂-O-C(O)-CH₂-CH₂-SH)₃, -C(O)-CH₂-SH und -C(O)-CH(SH)-CH₃; 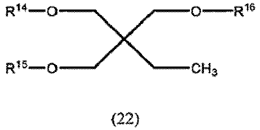 wobei R¹⁴, R¹⁵ und R¹⁶ gleich oder unterschiedlich sind und unabhängig ausgewählt sind aus -C(O)-CH₂-CH₂-SH, -C(O)-CH₂-CH(SH)CH₃, -[CH₂-CH₂-O-]ₒ-C(O)-CH₂-CH₂-SH, -C(O)-CH₂-SH und -C(O)-CH(SH)-CH₃, und o 1 bis 10 ist; 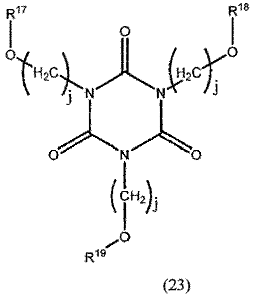 wobei j 2 bis 10 ist, R¹⁷, R¹⁸ und R¹⁹ gleich oder unterschiedlich sind und unabhängig ausgewählt sind aus -CH₂-CH₂SH, -CH₂-CH(SH)CH₃, -C(O)-CH₂-SH, -C(O)-CH(SH)-CH₃ und Gemischen davon.

7. Nanokristall-Zusammensetzung nach einem beliebigen der Ansprüche 1 bis 6, wobei das Polythiol eine Funktionalität von 2 bis 6 und bevorzugt von 2 bis 4 aufweist.

8. Nanokristall-Zusammensetzung nach einem beliebigen der Ansprüche 1 bis 7, wobei die Polyisocyanateverbindungen aus Polyisocyanaten ausgewählt sind, die auf Isocyanaten beruhen, die aus der Gruppe ausgewählt sind, bestehend aus 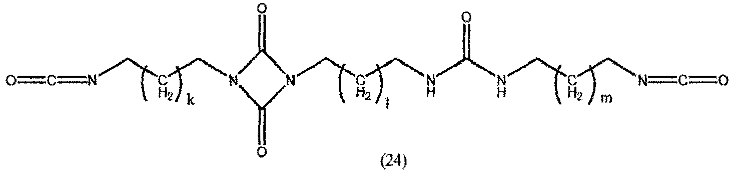 wobei k, l und m gleich oder unterschiedlich sind und einen Wert von 2 bis10 aufweisen; 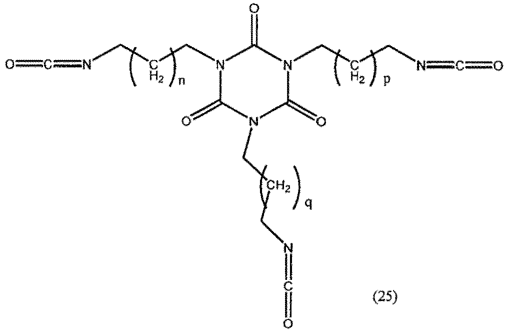 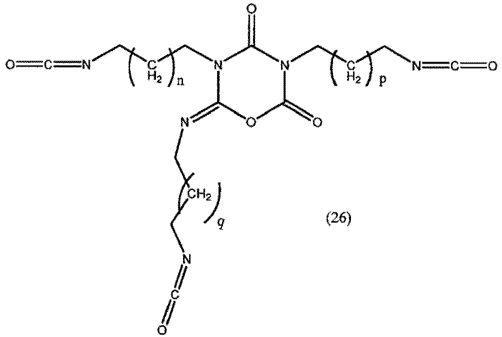 wobei n, p und q gleich oder unterschiedlich sind und einen Wert von 2 bis10 aufweisen, vorzugsweise n, p und q 6 sind; 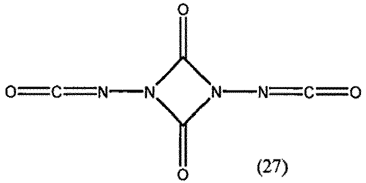 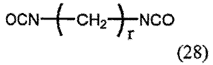 wobei r einen Wert von 2 bis 10 aufweist; 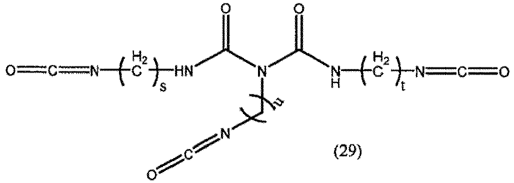 wobei s, t und u gleich oder unterschiedlich sind und einen Wert von 2 bis10, vorzugsweise einen Wert von 4 bis 6 aufweisen, und bevorzugt s, t und u gleich 6 sind;
Polyisocyanate basierend auf Toluoldiisocyanat; Polyisocyanate basierend auf Methylen-Diphenyl-Diisocyanat; Polyisocyanate basierend auf Isophorondiisocyanat; Vorpolymere basierend auf Toluoldiisocyanat; Vorpolymere basierend auf Methylen-Diphenyl-Diisocyanat; Vorpolymere basierend auf Isophorondiisocyanat, Vorpolymere basierend auf Hexamethylen-Diisocyanat und Gemische davon.

9. Nanokristall-Zusammensetzung nach einem beliebigen der Ansprüche 1 bis 8, wobei das Isocyanat eine Funktionalität von 2 bis 3 aufweist.

10. Nanokristall-Zusammensetzung nach einem beliebigen der Ansprüche 1 bis 9, umfassend die Nanokristalle von 0,01 bis 10 Gewichts-% des Gesamtgewichts der Zusammensetzung, vorzugsweise 0,05 bis 7,5 % und bevorzugt von 0,1 bis 5 %.

11. Nanokristall-Zusammensetzung nach einem beliebigen der Ansprüche 1 bis 10, umfassend eine Polymermatrix von 90 bis 99,99 Gewichts-% des Gesamtgewichts der Zusammensetzung, vorzugsweise von 92,5 bis 99,95 %, bevorzugt von 95 bis 99,9 %.

12. Nanokristall-Zusammensetzung nach einem beliebigen der Ansprüche 1 bis 11, wobei die Polymermatrix in Gegenwart einer fotolatenten Base von 0,01 bis 5 Gewichts-% des Gesamtgewichts der Polymermatrix, vorzugsweise von 0,01 bis 3 % und bevorzugt von 0,01 bis 2 % gebildet wird.

13. Ausgehärtete Nanokristall-Zusammensetzung nach einem beliebigen der Ansprüche 1 bis 11.

14. Produkt, umfassend eine Nanokristall-Zusammensetzung nach einem beliebigen der Ansprüche 1 bis 13, wobei das Produkt aus der Gruppe ausgewählt ist, die aus einer Anzeigevorrichtung, einer Licht emittierenden Vorrichtung, einer Photovoltaikzelle, einem Photodetektor, einer Energieumwandlungsvorrichtung, einem Laser, einem Sensor, einer thermoelektrischen Vorrichtung, einer Sicherheitsdruckfarbe, einer Beleuchtungsvorrichtung und katalytischen oder biomedizinischen Anwendungen besteht.

15. Verwendung einer Nanokristall-Zusammensetzung nach einem beliebigen der Ansprüche 1 bis 13 als Quelle von Photolumineszenz.

## Revendications

1. Composite nanocristallin comprenant
a) une pluralité de nanocristaux comprenant un noyau comprenant un métal ou un composé semi-conducteur ou un mélange de ceux-ci et au moins un ligand, dans lequel ledit noyau est entouré d'au moins un ligand,
b) une matrice polymère, dans lequel ladite matrice polymère est formée par polymérisation d'au moins un composé époxy ayant une fonctionnalité de 2 à 4, un composé polythiol ayant une fonctionnalité de 2 à 10 et un composé polyisocyanate ayant une fonctionnalité de 2 à 4.

2. Composite nanocristallin selon la revendication 1, dans lequel ledit noyau comprenant un métal ou un composé semi-conducteur ou un mélange de ceux-ci est composé d'éléments choisis dans une association d'un ou de plusieurs groupes différents du tableau périodique, de préférence ledit métal ou composé semi-conducteur est une association d'un ou de plusieurs éléments choisi(s) dans le groupe IV, d'un ou de plusieurs éléments choisi(s) dans les groupes II et VI ; d'un ou de plusieurs éléments choisi(s) dans les groupes III et V ; d'un ou de plusieurs éléments choisi(s) dans les groupes IV et VI ; d'un ou de plusieurs éléments choisi(s) dans les groupes I et III et VI ou une association de ceux-ci, de manière plus préférée, ledit métal ou composé semi-conducteur est choisi dans le groupe constitué par Si, Ge, SiC, SiGe, CdS, CdSe, CdTe, ZnS, ZnSe, ZnTe, ZnO, HgS, HgSe, HgTe, MgS, MgSe, GaN, GaP, GaSb, AIN, AIP, AlAs, AlSb₃, InN₃, InP, InAs, SnS, SnSe, SnTe, PbS, PbSe, PbTe, CuInS₂, CuInSe₂, CuGaS₂, CuGaSe₂, AgInS₂, AgInSe₂, AgGaS₂, AgGaSe₂ et des mélanges de ceux-ci, et de manière encore plus préférée ledit métal ou composé semi-conducteur est choisi dans le groupe constitué par CdSe, InP et des mélanges de ceux-ci.

3. Composite nanocristallin selon la revendication 1 ou 2, dans lequel ledit noyau comprend un noyau et au moins une enveloppe monocouche ou multicouche ou dans lequel ledit noyau comprend un noyau et au moins deux enveloppes monocouches et/ou multicouches.

4. Composite nanocristallin selon l'une quelconque des revendications 1 à 3, dans lequel ledit composé époxy est choisi dans le groupe constitué par 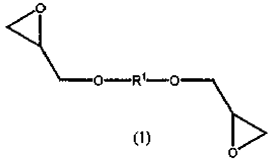 dans lequel R¹ est choisi dans le groupe constitué par un groupe alkyle en C1-C30 substitué ou non substitué, un groupe cycloalkyle en C3-C30 substitué ou non substitué, un groupe aryle substitué ou non substitué, un groupe alkylaryle en C7-C30 substitué ou non substitué, un groupe hétérocycloalkyle en C3-C30 substitué ou non substitué et un groupe hétéroalkyle en C1-C30 substitué ou non substitué, 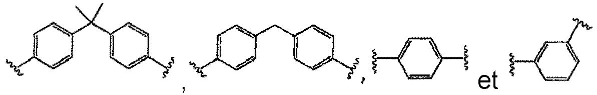 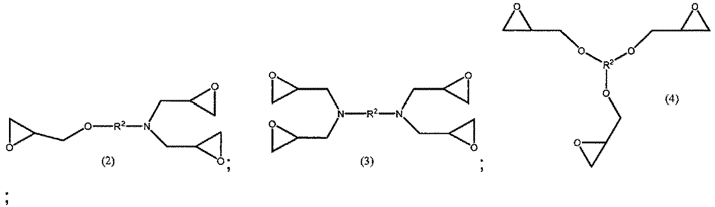 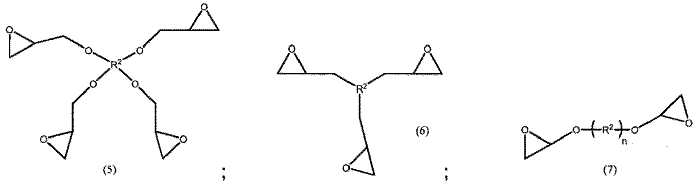 dans lequel R² est choisi dans le groupe constitué par un groupe alkyle en C1-C30 substitué ou non substitué, un groupe cycloalkyle en C3-C30 substitué ou non substitué, un groupe aryle substitué ou non substitué, un groupe alkylaryle en C7-C30 substitué ou non substitué, un groupe hétérocycloalkyle en C3-C30 substitué ou non substitué et un groupe hétéroalkyle en C1-C30 substitué ou non substitué ; et n est un nombre entier valant de 1 à 30 ; 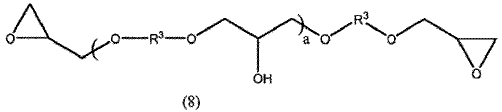 dans lequel a vaut 2 - 10, de préférence 4 - 6 et R³ est choisi parmi 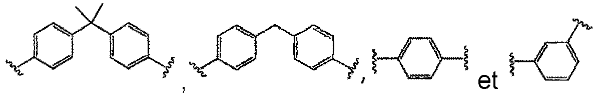 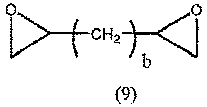 dans lequel b vaut 2 - 10, de préférence 4 - 6, de manière plus préférée, vaut 4 ; 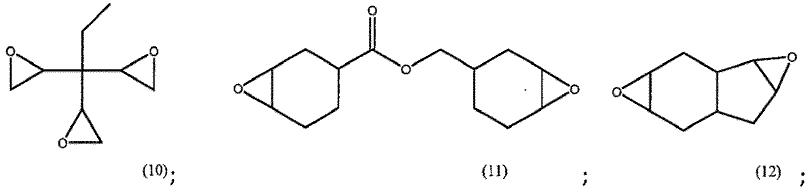 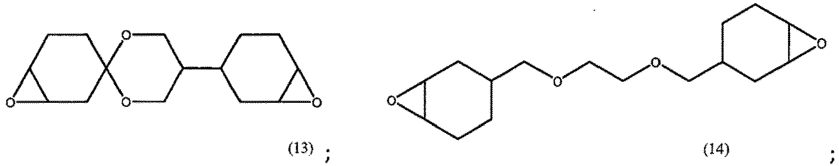 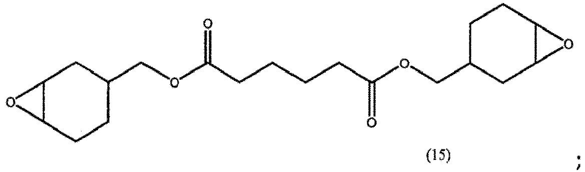 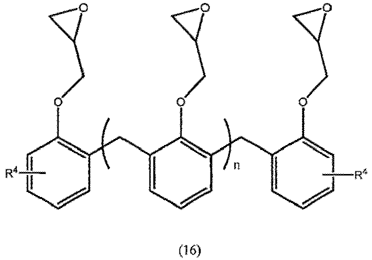 dans lequel R⁴ est choisi indépendamment dans le groupe constitué par un atome d'hydrogène, un atome d'halogène, un groupe alkyle et un groupe alcényle ; et n est un nombre entier valant de 1 à 10 ; 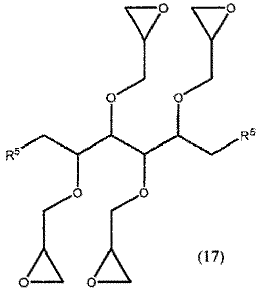 dans lequel R⁵ est choisi indépendamment dans le groupe constitué par un atome d'hydrogène, un groupe hydroxy, un atome d'halogène, un groupe alkyle en C1-C30 et un groupe alcényle en C2-C30 ; 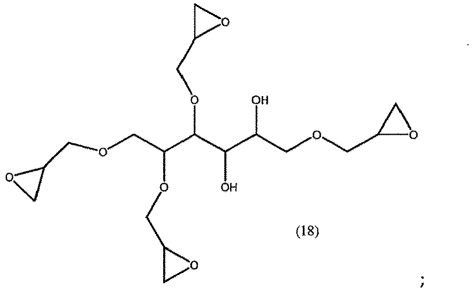 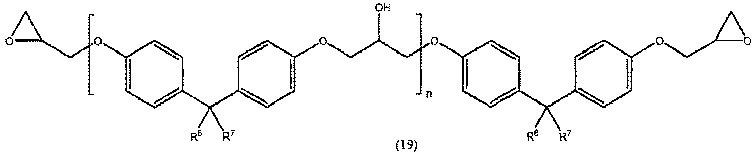 dans lequel R⁶ et R⁷ sont des groupes hydrocarbonés monovalents substitués ou non substitués ou des groupes alcoxy et n est un nombre entier valant de 0 to 16 ;
et des mélanges de ceux-ci.

5. Composite nanocristallin selon l'une quelconque des revendications 1 à 4, dans lequel ledit composé époxy a une fonctionnalité de 2 à 3.

6. Composite nanocristallin selon l'une quelconque des revendications 1 à 6, dans lequel ledit composé polythiol est choisi dans le groupe constitué par 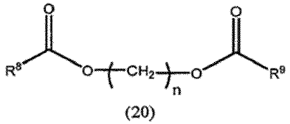 dans lequel n vaut 2 - 10, R⁸ et R⁹ sont identiques ou différents et sont choisis indépendamment parmi -CH₂-CH(SH)CH₃ et -CH₂-CH₂-SH ; 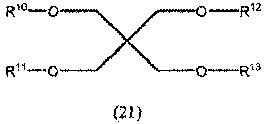 dans lequel R¹⁰, R¹¹, R¹² et R¹³ sont identiques ou différents et sont choisis indépendamment parmi -C(O)-CH₂-CH₂-SH, -C(O)-CH₂-CH(SH)CH₃, -CH₂-C(-CH₂-O-C(O)-CH₂-CH₂-SH)₃,-C(O)-CH₂-SH,-C(O)-CH(SH)-C H₃ ; 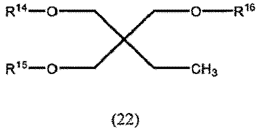 dans lequel R¹⁴, R¹⁵ et R¹⁶ sont identiques ou différents et sont choisis indépendamment parmi -C(O)-CH₂-CH₂-SH, -C(O)-CH₂-CH(SH)CH₃, -[CH₂-CH₂-O-]o-C(O)-CH₂-CH₂-SH, -C(O)-CH₂-SH, -C(O)-CH(SH)-CH₃ et o vaut 1-10 ; 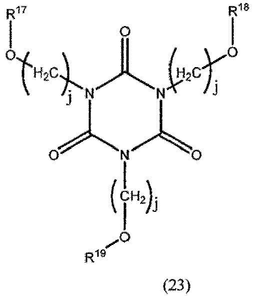 dans lequel j vaut 2-10, R¹⁷, R¹⁸ et R¹⁹ sont identiques ou différents et sont choisis indépendamment parmi -CH₂-CH₂SH, -CH₂-CH(SH)CH₃, -C(O)-CH₂-SH, -C(O)-CH(SH)-CH₃ et des mélanges de ceux-ci.

7. Composite nanocristallin selon l'une quelconque des revendications 1 à 6, dans lequel ledit composé polythiol a une fonctionnalité de 2 à 6 et, de manière plus préférée, de 2 à 4.

8. Composite nanocristallin selon l'une quelconque des revendications 1 à 7, dans lequel lesdits polyisocyanates sont choisis parmi les polyisocyanates à base de composés isocyanate choisis dans le groupe constitué par 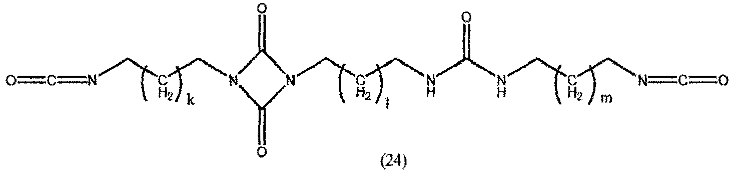 dans lequel k, l et m sont identiques ou différents et ont une valeur de 2-10 ; 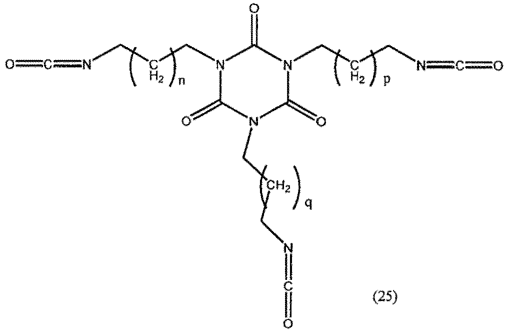 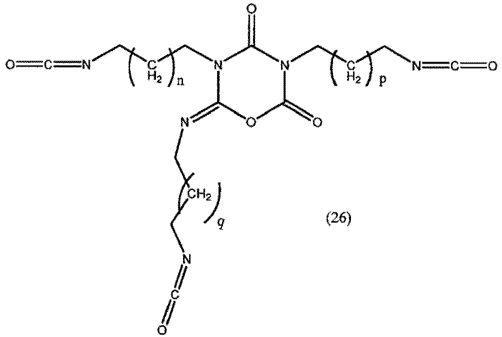 dans lequel n, p et q sont identiques ou différents et ont une valeur de 2 - 10, de préférence n, p et q valent 6 ; 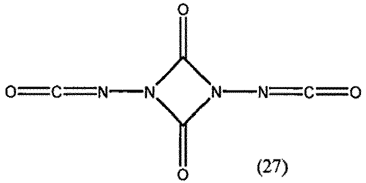 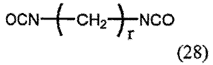 dans lequel r a une valeur de 2 - 1 0 ; 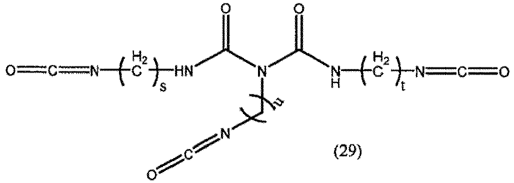 dans lequel s, t et u sont identiques ou différents et ont une valeur de 2-10, de préférence une valeur de 4-6, et de manière plus préférée s, t et u valent 6 ;
les polyisocyanates à base de diisocyanate de toluène ; les polyisocyanates à base de diisocyanate de diphénylméthylène ; les polyisocyanates à base de diisocyanate d'isophorone ; les prépolymères à base de diisocyanate de toluène ; les prépolymères à base de diisocyanate de diphénylméthylène ; les prépolymères à base de diisocyanate d'isophorone, les prépolymères à base de diisocyanate d'hexaméthylène et des mélanges de ceux-ci.

9. Composite nanocristallin selon l'une quelconque des revendications 1 à 8, dans lequel ledit composé isocyanate a une fonctionnalité de 2 à 3.

10. Composite nanocristallin selon l'une quelconque des revendications 1 à 9 comprenant lesdits nanocristaux en une proportion de 0,01 à 10 %, de préférence de 0,05 à 7,5 %, de manière plus préférée, de 0,1 à 5 % en poids du poids total du composite.

11. Composite nanocristallin selon l'une quelconque des revendications 1 à 10 comprenant une matrice polymère en une proportion de 90 à 99,99 %, de préférence de 92,5 à 99,95 %, de manière plus préférée, de 95 à 99,9 % en poids du poids total du composite.

12. Composite nanocristallin selon l'une quelconque des revendications 1 à 11, dans lequel ladite matrice polymère est formée en la présence d'une base photolatente en une proportion de 0,01 à 5 %, de préférence de 0,01 à 3 %, de manière plus préférée, de 0,01 à 2 % en poids du poids total de la matrice polymère.

13. Composite nanocristallin durci selon l'une quelconque des revendications 1 à 11.

14. Produit comprenant un composite nanocristallin selon l'une quelconque des revendications 1 à 13, dans lequel ledit produit est choisi dans le groupe constitué par un dispositif d'affichage, un dispositif électroluminescent, une cellule photovoltaïque, un photodétecteur, un dispositif convertisseur d'énergie, un laser, un capteur, un dispositif thermoélectrique, une encre de sécurité, un dispositif d'éclairage et dans des applications catalytiques ou biomédicales.

15. Utilisation d'un composite nanocristallin selon l'une quelconque des revendications 1 à 13 en tant qu'une source de photoluminescence.
